# EUROPEAN PATENT SPECIFICATION

(11) **EP 4 107 302 B1**
(45) Date of publication and mention of the grant of the patent: **10.07.2024**
(21) Application number: 21711138.4
(22) Date of filing: 18.02.2021
(51) Int. Cl.: C22C 21/04, C22C 21/06, C22C 21/08, C22F 1/043, C22F 1/047, C22F 1/05, C22C 21/02

(54) **CONTROL OF ALUMINUM ALLOY MICROSTRUCTURE FOR IMPROVED CORROSION RESISTANCE AND BONDING PERFORMANCE**
KONTROLLE DER MIKROSTRUKTUR EINER ALUMINIUMLEGIERUNG FÜR VERBESSERTE KORROSIONSBESTÄNDIGKEIT UND BONDLEISTUNG
CONTRÔLE DE LA MICROSTRUCTURE D'ALLIAGE D'ALUMINIUM POUR RÉSISTANCE À LA CORROSION ET PERFORMANCES DE LIAISON AMÉLIORÉES

(30) Priority: 19.02.2020 US 202062978767 P; 03.03.2020 US 202062984555 P; 23.03.2020 US 202062993365 P
(43) Date of publication of application: 28.12.2022
(73) Proprietor: Novelis, Inc., Atlanta, GA 30326 (US)
(72) Inventor: MACFARLANE, Theresa Elizabeth, Kennesaw, Georgia 30144 (US); CUMARANATUNGE, Lasitha, Kennesaw, Georgia 30144 (US); DAS, Sazol Kumar, Kennesaw, Georgia 30144 (US); YUAN, Yudie, Kennesaw, Georgia 30144 (US); BECK, Thomas J., Kennesaw, Georgia 30144 (US); KAMAT, Rajeev G., Kennesaw, Georgia 30144 (US); REDMOND, Peter Lloyd, Kennesaw, Georgia 30144 (US); HUNTER, John Anthony, Kennesaw, Georgia 30144 (US); LI, Liangliang, Irvine, California 92604 (US); WAGSTAFF, Samuel Robert, Marietta, Georgia 30066 (US); SUNDARAM, Kumar, Kennesaw, Georgia 30144 (US); WAGSTAFF, Robert Bruce, Kennesaw, Georgia 30144 (US)
(74) Representative: Weickmann & Weickmann PartmbB
(86) International application number: PCT/US2021/018496
(87) International publication number: WO 2021/168064

(56) References cited:
- WO-A1-2019/141693
- US-A1- 2019 193 185
- US-A1- 2019 194 780

## Description

### CROSS-REFERENCE TO RELATED APPLICATIONS

This application claims the benefit of and priority to U.S. Provisional Application No. 62/978,767, filed on February 19, 2020, U.S. Provisional Application No. 62/984,555, filed on March 3, 2020, and U.S. Provisional Application No. 62/993,365, filed on March 23, 2020.

### FIELD

The present disclosure relates to metallurgy generally and more specifically to aluminum alloys and aluminum alloy products exhibiting good corrosion resistance and bond durability performance.

### BACKGROUND

Aluminum alloy products, such as sheet metal, may be joined to other products using a variety of techniques. For example, aluminum alloy products may be joined to one another via welding, riveting, adhesive bonding (e.g., using epoxy adhesives, polyurethane adhesives, phenolic adhesives, or acrylate adhesives), or the like. For joining aluminum alloy products to other products, such as steel or polymeric products, welding techniques are typically not applicable, but techniques like riveting or use of adhesive bonding can be used to join the products together. The bonding performance of different aluminum alloys and aluminum alloy products may depend on a variety of factors, such as composition, processing history, or alloy microstructure. These factors may also impact the corrosion potential of the alloys and products, and corrosion may also be an overarching factor in the bond durability performance of a particular aluminum alloy or product. For example, the sooner that corrosion is initiated or occurs at an adhesively bonded site, the sooner that the bond may fail. US 2019/0193185 A1 is directed to an aluminum alloy product comprising a migrant element, a subsurface portion having a concentration of the migrant element and a bulk portion having a concentration of the migrant element, wherein the aluminum alloy product comprises an enrichment ratio of 4.0 or less, wherein the enrichment ratio is a ratio of the concentration of the migrant element in the subsurface portion to the concentration of the migrant element in the bulk portion. US' 185 further discloses a method of producing such an aluminum alloy product comprising casting an aluminum alloy comprising a migrant element to produce a cast aluminum alloy article, rolling the cast aluminum alloy article to provide a rolled aluminum alloy article, and heat treating the rolled aluminum alloy article to form the aluminum alloy product. WO 2019/141693 A1 is directed to a method for producing a 6xxx series aluminum sheet comprising the steps of homogenizing an ingot made from a 6xxx series aluminum alloy, cooling the homogenized ingot with a cooling rate in a range of from 150 °C/h to 2000 °C/h directly to the hot rolling starting temperature, hot rolling the ingot to a hot rolling final thickness and coiling at the hot rolling final thickness with such conditions that at least 90% recrystallization is obtained while controlling the temperatures of hot rolling, in particular the relationship between the hot rolling starting temperature and the hot rolling exit temperature and/or controlling the grain size after coiling, cold rolling to obtain a cold rolled sheet. US 2019/0194780 A1 is directed to an aluminum alloy article, comprising an aluminum alloy material that comprises Cu and Mg as alloying elements, wherein the aluminum alloy article comprises a subsurface portion and a bulk portion, and wherein an atomic concentration ratio of Cu to Mg in the subsurface portion is from about 0.2 to about 5.0.

### SUMMARY

The term embodiment and like terms are intended to refer broadly to all of the subject matter of this disclosure and the claims below. Statements containing these terms should be understood not to limit the subject matter described herein or to limit the meaning or scope of the claims below. Embodiments of the present disclosure covered herein are defined by the claims below, not this summary. This summary is a high-level overview of various aspects of the disclosure and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this disclosure, any or all drawings and each claim.

In a first aspect, aluminum alloy products are disclosed. Example aluminum alloy products may include aluminum alloy ingots, slabs, shates, plates or sheets. The aluminum alloy products have alloy compositions allowing for good performance when used, such as in bonded configurations where high bond durability is useful.

According to the invention, aluminum alloy products comprise a 6xxx series aluminum alloys with a composition of alloying elements as defined in claim 1 tailored such that the aluminum alloy product exhibits good bond durability. 6xxx series aluminum alloys may include β-phase intermetallic particles and α-phase intermetallic particles. In some cases, β-phase intermetallic particles may be characterized by and/or exhibit an aspect ratio greater than about 2, such as from 1.9 to 100, from 2 to 5, from 5 to 10, from 10 to 20, from 20 to 50, or from 50 to 100. In some cases, α-phase intermetallic particles may be characterized and/or exhibit an aspect ratio of from about 1 to 1.5, such as from 0.9 to 1, from 1 to 1.1, from 1.1 to 1.2, from 1.3 to 1.4, from 1.4 to 1.5, or from 1.5 to 1.6. β-phase intermetallic particles may comprise aluminum, iron, and silicon, α-phase intermetallic particles may comprise aluminum, silicon, and one or more of iron, manganese, or chromium.

The presence of, concentration of, or ratio of the amount of β-phase intermetallic particles and α-phase intermetallic particles impacts the utility of the aluminum alloy product for a particular application, such as due to the different reactivity or corrosion potentials of β-phase intermetallic particles and α-phase intermetallic particles. For example, a corrosion potential of the β-phase intermetallic particles may greater than that of an aluminum alloy matrix supporting the β-phase intermetallic particles. As another example, a corrosion potential of the β-phase intermetallic particles may be greater than that of the α-phase intermetallic particles.

By controlling certain properties of the 6xxx series alloy, the alloy may exhibit certain properties, such as corrosion resistance, which can allow for good performance in various different applications. According to the invention, a concentration of α-phase intermetallic particles is greater than β-phase intermetallic particles in an aluminum alloy. Concentrations (e.g., weight percents) of α-phase intermetallic particles and β-phase intermetallic particles, and ratios of weight percents of the α-phase intermetallic particles to the β-phase intermetallic particles, may be determined by a process comprising phase characterization using energy dispersive x-ray spectroscopy (EDXS) composition analysis. In some examples, a total concentration of α-phase-stabilizing alloying elements in the 6xxx series aluminum alloy may be greater than or about 0.2 wt.%. According to the invention, a ratio of the total concentration of α-phase-stabilizing alloying elements to an amount of excess silicon in the 6xxx series aluminum alloy is greater than or about 1.0. According to the invention, a weight percent ratio of the α-phase intermetallic particles to the β-phase intermetallic particles in the aluminum alloy product is greater than 2.0.

As noted above, the aluminum alloy products of this aspect can exhibit good performance. In some examples, the aluminum alloy product can exhibit a bond durability of from 30 cycles to 65 cycles or more according to an ASTM D3762 standard test or a FLTM BV 101-07 standard test. These tests may correspond to standard tests used to evaluate bond durability of aluminum alloy products joined by an adhesive, such as an epoxy adhesive, polyurethane adhesive, phenolic adhesive, acrylate adhesive, or other adhesive. In some cases, any desirable number of cycles may be used for evaluating how durable a bond between the joined products may be.

The aluminum alloy products described herein comprise a 6xxx series aluminum alloy, which generally indicates that the alloy includes amounts of silicon and magnesium beyond trace amounts, comprising up to 1.8 wt.% silicon, up to 1.8 wt.% iron, up to 1.5 wt.% copper, up to 0.5 wt.% manganese, from 0.2 wt.% to 3.0 wt.% magnesium, up to 0.25 wt.% titanium, up to 1.5 wt.% zinc, up to 1 wt.% nickel, up to 0.25 wt.% vanadium, up to 0.25 wt.% zirconium, up to 0.5 wt.% chromium, up to 0.15 wt.% impurities and the balance aluminum. In some cases, the 6xxx series aluminum alloy may comprise up to 0.25 wt.% titanium carbide. Optionally, a concentration of a carbide grain refiner in the 6xxx series aluminum alloy may be up to 10 parts per million. In some cases, the 6xxx series aluminum alloy is free of or substantially free of boron, meaning that boron may be present in only up to trace amounts.

In some cases, the 6xxx series aluminum alloy may comprise about 0.2 wt.% or more of one or more α-phase-stabilizing alloying elements in total (i.e., a sum of the concentrations of all α-phase-stabilizing alloying elements may be about 0.2 wt.% or more). The α-phase-stabilizing alloying elements comprise copper, chromium, manganese, zirconium and vanadium. In some cases, an upper limit on the concentrations of all α-phase-stabilizing alloying elements in total may be less than or about 2 wt.%. Example total concentrations of all α-phase-stabilizing alloying elements may be from 0.2 wt.% to 0.4 wt.%, from 0.2 wt.% to 0.6 wt.% from 0.2 wt.% to 0.8 wt.%, from 0.2 wt.% to 1.0 wt.%, from 0.2 wt.% to 1.2 wt.%, from 0.2 wt.% to 1.4 wt.%, from 0.2 wt.% to 1.6 wt.%, from 0.2 wt.% to 1.8 wt.%, from 0.2 wt.% to 2.0 wt.%, from 0.4 wt.% to 0.6 wt.%, from 0.4 wt.% to 0.8 wt.%, from 0.4 wt.% to 1.0 wt.%, from 0.4 wt.% to 1.2 wt.%, from 0.4 wt.% to 1.4 wt.%, from 0.4 wt.% to 1.6 wt.%, from 0.4 wt.% to 1.8 wt.%, from 0.4 wt.% to 2.0 wt.%, from 0.6 wt.% to 0.8 wt.%, from 0.6 wt.% to 1.0 wt.%, from 0.6 wt.% to 1.2 wt.%, from 0.6 wt.% to 1.4 wt.%, from 0.6 wt.% to 1.6 wt.%, from 0.6 wt.% to 1.8 wt.%, from 0.6 wt.% to 2.0 wt.%, from 0.8 wt.% to 1.0 wt.%, from 0.8 wt.% to 1.2 wt.%, from 0.8 wt.% to 1.4 wt.%, from 0.8 wt.% to 1.6 wt.%, from 0.8 wt.% to 1.8 wt.%, from 0.8 wt.% to 2.0 wt.%, from 1.0 wt.% to 1.2 wt.%, from 1.0 wt.% to 1.4 wt.%, from 1.0 wt.% to 1.6 wt.%, from 1.0 wt.% to 1.8 wt.%, from 1.0 wt.% to 2.0 wt.%, from 1.2 wt.% to 1.4 wt.%, from 1.2 wt.% to 1.6 wt.%, from 1.2 wt.% to 1.8 wt.%, from 1.2 wt.% to 2.0 wt.%, from 1.4 wt.% to 1.6 wt.%, from 1.4 wt.% to 1.8 wt.%, from 1.4 wt.% to 2.0 wt.%, from 1.6 wt.% to 1.8 wt.%, from 1.6 wt.% to 2.0 wt.%, or from 1.8 wt.% to 2.0 wt.%.

A ratio of the total concentration of α-phase-stabilizing alloying elements to an amount of excess silicon in the 6xxx series aluminum alloy is greater than or about 1.0. In some cases, an upper limit on the ratio of the total concentration of α-phase-stabilizing alloying elements to an amount of excess silicon may be about 3. Example ratios of the total concentration of α-phase-stabilizing alloying elements to an amount of excess silicon in the 6xxx series aluminum alloy may be from 1 to 1.25, from 1 to 1.5, from 1 to 1.75 from 1 to 2, from 1 to 2.25, from 1 to 2.5, from 1 to 2.75, from 1 to 3, from 1.25 to 1.5, from 1.25 to 1.75, from 1.25 to 2, from 1.25 to 2.25, from 1.25 to 2.5, from 1.25 to 2.75, from 1.25 to 3, from 1.5 to 1.75, from 1.5 to 2, from 1.5 to 2.25, from 1.5 to 2.5, from 1.5 to 2.75, from 1.5 to 3, from 1.75 to 2, from 1.75 to 2.25, from 1.75 to 2.5, from 1.75 to 2.75, from 1.75 to 3, from 2 to 2.25, from 2 to 2.5, from 2 to 2.75, from 2 to 3, from 2.25 to 2.5, from 2.25 to 2.75, from 2.25 to 3, from 2.5 to 2.75 from 2.5 to 3, or from 2.75 to 3.

Silicon, when present in an aluminum alloy, may bond with magnesium to form magnesium silicide, Mg₂Si. Silicon present in an aluminum alloy above that amount needed to stoichiometrically form Mg₂Si with any magnesium present may be considered excess silicon. In some cases, silicon may bond with other elements in an aluminum alloy, such as iron, manganese, and/or chromium. Accordingly, an amount of silicon considered excess silicon may be an amount of silicon in excess of that needed to bond with magnesium, iron, manganese, and/or chromium. In some examples, an excess silicon amount in the 6xxx series aluminum alloy may be greater than or about 0.1 wt.% and less than or about 1.4 wt.%. Example excess silicon amounts may be from 0.1 wt.% to 0.2 wt.%, from 0.1 wt.% to 0.3 wt.%, from 0.1 wt.% to 0.4 wt.%, from 0.1 wt.% to 0.5 wt.%, from 0.1 wt.% to 0.6 wt.%, from 0.1 wt.% to 0.7 wt.%, from 0.1 wt.% to 0.8 wt.%, from 0.1 wt.% to 0.9 wt.%, from 0.1 wt.% to 1.0 wt.%, from 0.1 wt.% to 1.1 wt.%, from 0.1 wt.% to 1.2 wt.%, from 0.1 wt.% to 1.3 wt.%, from 0.1 wt.% to 1.4 wt.%, from 0.2 wt.% to 0.3 wt.%, from 0.2 wt.% to 0.4 wt.%, from 0.2 wt.% to 0.5 wt.%, from 0.2 wt.% to 0.6 wt.%, from 0.2 wt.% to 0.7 wt.%, from 0.2 wt.% to 0.8 wt.%, from 0.2 wt.% to 0.9 wt.%, from 0.2 wt.% to 1.0 wt.%, from 0.2 wt.% to 1.1 wt.%, from 0.2 wt.% to 1.2 wt.%, from 0.2 wt.% to 1.3 wt.%, from 0.2 wt.% to 1.4 wt.%, from 0.3 wt.% to 0.4 wt.%, from 0.3 wt.% to 0.5 wt.%, from 0.3 wt.% to 0.6 wt.%, from 0.3 wt.% to 0.7 wt.%, from 0.3 wt.% to 0.8 wt.%, from 0.3 wt.% to 0.9 wt.%, from 0.3 wt.% to 1.0 wt.%, from 0.3 wt.% to 1.1 wt.%, from 0.3 wt.% to 1.2 wt.%, from 0.3 wt.% to 1.3 wt.%, from 0.3 wt.% to 1.4 wt.%, from 0.4 wt.% to 0.5 wt.%, from 0.4 wt.% to 0.6 wt.%, from 0.4 wt.% to 0.7 wt.%, from 0.4 wt.% to 0.8 wt.%, from 0.4 wt.% to 0.9 wt.%, from 0.4 wt.% to 1.0 wt.%, from 0.4 wt.% to 1.1 wt.%, from 0.4 wt.% to 1.2 wt.%, from 0.4 wt.% to 1.3 wt.%, from 0.4 wt.% to 1.4 wt.%, from 0.5 wt.% to 0.6 wt.%, from 0.5 wt.% to 0.7 wt.%, from 0.5 wt.% to 0.8 wt.%, from 0.5 wt.% to 0.9 wt.%, from 0.5 wt.% to 1.0 wt.%, from 0.5 wt.% to 1.1 wt.%, from 0.5 wt.% to 1.2 wt.%, from 0.5 wt.% to 1.3 wt.%, from 0.5 wt.% to 1.4 wt.%, from 0.6 wt.% to 0.7 wt.%, from 0.6 wt.% to 0.8 wt.%, from 0.6 wt.% to 0.9 wt.%, from 0.6 wt.% to 1.0 wt.%, from 0.6 wt.% to 1.1 wt.%, from 0.6 wt.% to 1.2 wt.%, from 0.6 wt.% to 1.3 wt.%, from 0.6 wt.% to 1.4 wt.%, from 0.7 wt.% to 0.8 wt.%, from 0.7 wt.% to 0.9 wt.%, from 0.7 wt.% to 1.0 wt.%, from 0.7 wt.% to 1.1 wt.%, from 0.7 wt.% to 1.2 wt.%, from 0.7 wt.% to 1.3 wt.%, from 0.7 wt.% to 1.4 wt.%, from 0.8 wt.% to 0.9 wt.%, from 0.8 wt.% to 1.0 wt.%, from 0.8 wt.% to 1.1 wt.%, from 0.8 wt.% to 1.2 wt.%, from 0.8 wt.% to 1.3 wt.%, from 0.8 wt.% to 1.4 wt.%, from 0.9 wt.% to 1.0 wt.%, from 0.9 wt.% to 1.1 wt.%, from 0.9 wt.% to 1.2 wt.%, from 0.9 wt.% to 1.3 wt.%, from 0.9 wt.% to 1.4 wt.%, from 1.0 wt.% to 1.1 wt.%, from 1.0 wt.% to 1.2 wt.%, from 1.0 wt.% to 1.3 wt.%, from 1.0 wt.% to 1.4 wt.%, from 1.1 wt.% to 1.2 wt.%, from 1.1 wt.% to 1.3 wt.%, from 1.1 wt.% to 1.4 wt.%, from 1.2 wt.% to 1.3 wt.%, from 1.2 wt.% to 1.4 wt.%, or from 1.3 wt.% to 1.4 wt.%.

In some cases, a ratio of the total concentration of α-phase-stabilizing alloying elements to an amount of iron in the 6xxx series aluminum alloy may be greater than or about 0.5. An upper limit on the ratio of the total concentration of α-phase-stabilizing alloying elements to an amount of iron in the 6xxx series aluminum alloy may be about 8. Examples ratios of the total concentration of α-phase-stabilizing alloying elements to an amount of iron in the 6xxx series aluminum alloy may be from 0.5 to 1, from 0.5 to 1.5, from 0.5 to 2, from 0.5 to 2.5, from 0.5 to 3, from 0.5 to 3.5, from 0.5 to 4, from 0.5 to 4.5, from 0.5 to 5, from 0.5 to 5.5, from 0.5 to 6, from 0.5 to 6.5, from 0.5 to 7, from 0.5 to 7.5, from 0.5 to 8, from 1 to 1.5, from 1 to 2, from 1 to 2.5, from 1 to 3, from 1 to 3.5, from 1 to 4, from 1 to 4.5, from 1 to 5, from 1 to 5.5, from 1 to 6, from 1 to 6.5, from 1 to 7, from 1 to 7.5, from 1 to 8, from 1.5 to 2, from 1.5 to 2.5, from 1.5 to 3, from 1.5 to 3.5, from 1.5 to 4, from 1.5 to 4.5, from 1.5 to 5, from 1.5 to 5.5, from 1.5 to 6, from 1.5 to 6.5, from 1.5 to 7, from 1.5 to 7.5, from 1.5 to 8, from 2 to 2.5, from 2 to 3, from 2 to 3.5, from 2 to 4, from 2 to 4.5, from 2 to 5, from 2 to 5.5, from 2 to 6, from 2 to 6.5, from 2 to 7, from 2 to 7.5, from 2 to 8, from 2.5 to 3, from 2.5 to 3.5, from 2.5 to 4, from 2.5 to 4.5, from 2.5 to 5, from 2.5 to 5.5, from 2.5 to 6, from 2.5 to 6.5, from 2.5 to 7, from 2.5 to 7.5, from 2.5 to 8, from 3 to 3.5, from 3 to 4, from 3 to 4.5, from 3 to 5, from 3 to 5.5, from 3 to 6, from 3 to 6.5, from 3 to 7, from 3 to 7.5, from 3 to 8, from 3.5 to 4, from 3.5 to 4.5, from 3.5 to 5, from 3.5 to 5.5, from 3.5 to 6, from 3.5 to 6.5, from 3.5 to 7, from 3.5 to 7.5, from 3.5 to 8, from 4 to 4.5, from 4 to 5, from 4 to 5.5, from 4 to 6, from 4 to 6.5, from 4 to 7, from 4 to 7.5, from 4 to 8, from 4.5 to 5, from 4.5 to 5.5, from 4.5 to 6, from 4.5 to 6.5, from 4.5 to 7, from 4.5 to 7.5, from 4.5 to 8, from 5 to 5.5, from 5 to 6, from 5 to 6.5, from 5 to 7, from 5 to 7.5, from 5 to 8, from 5.5 to 6, from 5.5 to 6.5, from 5.5 to 7, from 5.5 to 7.5, from 5.5 to 8, from 6 to 6.5, from 6 to 7, from 6 to 7.5, from 6 to 8, from 6.5 to 7, from 6.5 to 7.5, from 6.5 to 8, from 7 to 7.5, from 7 to 8, or from 7.5 to 8.

In some cases, the aluminum alloy products described herein may exhibit good bond durability performance, which may arise via the corrosion potential or susceptibility of the aluminum alloy product. In some examples, the aluminum alloy products described herein may exhibit reduced corrosion potential as compared to comparable aluminum alloy products, such as those comprising: a comparable 6xxx series aluminum alloy having a total concentration of α-phase-stabilizing alloying elements of less than 0.5 wt.% and a comparable weight percent ratio of the α-phase intermetallic particles to the β-phase intermetallic particles in the comparable aluminum alloy being less than 1.

Since the aluminum alloy products described herein may exhibit good bond durability performance, joined aluminum alloy products comprise any of the aluminum alloy products described herein joined to a second product, such as another aluminum alloy product by an adhesive. Such a joined aluminum alloy product may specifically exhibit a bond durability of from 30 cycles to 65 cycles or more according to an ASTM D3762 standard test or a FLTM BV 101-07 standard test.

In another aspect, the present application relates to a method for preparing an aluminum alloy product as defined in the claims. Such a method may be useful, in various embodiments, for generating the aluminum alloy products described herein.

Other objects and advantages will be apparent from the following detailed description of non-limiting examples.

### BRIEF DESCRIPTION OF THE FIGURES

The specification makes reference to the following appended figures, in which use of like reference numerals in different figures is intended to illustrate like or analogous components.
FIG. 1 provides a schematic overview of an example method for making an aluminum alloy product.
FIG. 2 provides a flow diagram outlining an example method for characterizing an aluminum alloy product.
FIG. 3 provides a schematic overview of an example aluminum alloy product adhesively bonded to another product.

### DETAILED DESCRIPTION

Described herein are aluminum alloy products that generally have a microstructure and composition that resists corrosion. This corrosion resistance, in turn, allows the aluminum alloy products to exhibit favorable bond durability performance, such as when adhesively bonded to another product (e.g., another aluminum alloy product), while also exhibiting favorable mechanical properties.

The aluminum alloy products according to the invention comprise 6xxx series aluminum alloys (also referred to herein as 6000 series aluminum alloys), comprising up to 1.8 wt.% silicon, up to 1.8 wt.% iron, up to 1.5 wt.% copper, up to 0.5 wt.% manganese, from 0.2 wt.% to 3.0 wt.% magnesium, up to 0.25 wt.% titanium, up to 1.5 wt.% zinc, up to 1 wt.% nickel, up to 0.25 wt.% vanadium, up to 0.25 wt.% zirconium, up to 0.5 wt.% chromium, up to 0.15 wt.% impurities, and the remainder aluminum. The disclosed aluminum alloy products may include various intermetallic particles, such as β-phase intermetallic particles and α-phase intermetallic particles. Optionally, α-phase intermetallic particles and β-phase intermetallic particles may comprise aluminum, iron, manganese, and/or silicon, among others.

The presence of intermetallic particles at high number densities, weight percentages, or high volume percentages in an aluminum alloy product comprising a 6xxx series aluminum alloy may result in the aluminum alloy product exhibiting unfavorable corrosion properties and also poor bonding character, such as with bonded joints employing polymeric adhesives (e.g., epoxy adhesives, polyurethane adhesives, phenolic adhesives, or acrylate adhesive). In particular, β-phase intermetallic particles may exhibit higher cathodic potential with respect to the surrounding matrix in the aluminum alloy product and serve as active sites for corrosion (e.g., pitting corrosion) to initiate. On the other hand, while α-phase intermetallic particles may still potentially serve as active sites for corrosion, the corrosion initiation and propagation at α-phase intermetallic particles may take place at a much slower rate than that occurring at β-phase intermetallic particles. In general, 6xxx series aluminum alloys featuring less β-phase intermetallic particles and more α-phase intermetallic particles may tend to undergo slower corrosion and/or exhibit better bond durability performance than 6xxx series aluminum alloys featuring less α-phase intermetallic particles and more β-phase intermetallic particles.

The composition of a 6xxx series aluminum alloy may, in embodiments, influence the relative proportions of α-phase intermetallic particles and β-phase intermetallic particles created during production of the aluminum alloy product, such as in a casting process, a homogenization process, a heat treatment process, or the like. The aluminum alloy products described herein include those comprising 6xxx series aluminum alloys that typically form more β-phase intermetallic particles than α-phase intermetallic particles during production according to conventional or typical casting and processing methods, but the aluminum alloy products according to the invention instead actually exhibit more α-phase intermetallic particles than β-phase intermetallic particles. Stated another way, some 6xxx series aluminum alloys may have compositions that tend to for more β-phase intermetallic particles than α-phase intermetallic particles when produced according to conventional or typical casting and processing methods; however, these 6xxx series aluminum alloy compositions can comprise more α-phase intermetallic particles than β-phase intermetallic particles, such as if processed differently or by modifying the composition in certain ways.

The amounts, ratios, and sizes of α-phase intermetallic particles and β-phase intermetallic particles may be modified using a number of techniques, including adjusting the overall composition of the alloys, as noted above, and also or alternatively controlling a variety of different processing conditions (e.g., casting conditions, homogenization conditions, rolling conditions, etching conditions, heat treatment conditions, etc.) to which the aluminum alloy products are subjected. The disclosed aluminum alloy products with larger relative amounts of α-phase intermetallic particles than β-phase intermetallic particles may exhibit good corrosion resistance and favorable bond durability performance.

### Definitions and Descriptions:

As used herein, the terms "invention," "the invention," "this invention" and "the present invention" are intended to refer broadly to all of the subject matter of this patent application and the claims below. Statements containing these terms should be understood not to limit the subject matter described herein or to limit the meaning or scope of the patent claims below.

In this description, reference is made to alloys identified by AA numbers and other related designations, such as "series" or "6xxx." For an understanding of the number designation system most commonly used in naming and identifying aluminum and its alloys, see "International Alloy Designations and Chemical Composition Limits for Wrought Aluminum and Wrought Aluminum Alloys" or "Registration Record of Aluminum Association Alloy Designations and Chemical Compositions Limits for Aluminum Alloys in the Form of Castings and Ingot," both published by The Aluminum Association.

As used herein, a plate generally has a thickness of greater than about 15 mm. For example, a plate may refer to an aluminum product having a thickness of greater than about 15 mm, greater than about 20 mm, greater than about 25 mm, greater than about 30 mm, greater than about 35 mm, greater than about 40 mm, greater than about 45 mm, greater than about 50 mm, or greater than about 100 mm.

As used herein, a shate (also referred to as a sheet plate) generally has a thickness of from about 4 mm to about 15 mm. For example, a shate may have a thickness of about 4 mm, about 5 mm, about 6 mm, about 7 mm, about 8 mm, about 9 mm, about 10 mm, about 11 mm, about 12 mm, about 13 mm, about 14 mm, or about 15 mm.

As used herein, a sheet generally refers to an aluminum product having a thickness of less than about 4 mm. For example, a sheet may have a thickness of less than about 4 mm, less than about 3 mm, less than about 2 mm, less than about 1 mm, less than about 0.5 mm, or less than about 0.3 mm (e.g., about 0.2 mm).

Reference may be made in this application to alloy temper or condition. For an understanding of the alloy temper descriptions most commonly used, see "American National Standards (ANSI) H35 on Alloy and Temper Designation Systems." An F condition or temper refers to an aluminum alloy as fabricated. An O condition or temper refers to an aluminum alloy after annealing. An Hxx condition or temper, also referred to herein as an H temper, refers to a non-heat treatable aluminum alloy after cold rolling with or without thermal treatment (e.g., annealing). Suitable H tempers include HX1, HX2, HX3 HX4, HX5, HX6, HX7, HX8, or HX9 tempers. A T1 condition or temper refers to an aluminum alloy cooled from hot working and naturally aged (e.g., at room temperature). A T2 condition or temper refers to an aluminum alloy cooled from hot working, cold worked and naturally aged. A T3 condition or temper refers to an aluminum alloy solution heat treated, cold worked, and naturally aged. A T4 condition or temper refers to an aluminum alloy solution heat treated and naturally aged. A T5 condition or temper refers to an aluminum alloy cooled from hot working and artificially aged (at elevated temperatures). A T6 condition or temper refers to an aluminum alloy solution heat treated and artificially aged. A T7 condition or temper refers to an aluminum alloy solution heat treated and artificially overaged. A T8x condition or temper refers to an aluminum alloy solution heat treated, cold worked, and artificially aged. A T9 condition or temper refers to an aluminum alloy solution heat treated, artificially aged, and cold worked. A W condition or temper refers to an aluminum alloy after solution heat treatment.

As used herein, terms such as "cast metal product," "cast product," "cast aluminum alloy product," and the like are interchangeable and refer to a product produced by direct chill casting (including direct chill co-casting) or semi-continuous casting, continuous casting (including, for example, by use of a twin belt caster, a twin roll caster, a block caster, or any other continuous caster), electromagnetic casting, hot top casting, or any other casting method.

As used herein, the meaning of "room temperature" can include a temperature of from about 15 °C to about 30 °C, for example about 15 °C, about 16 °C, about 17 °C, about 18 °C, about 19 °C, about 20 °C, about 21 °C, about 22 °C, about 23 °C, about 24 °C, about 25 °C, about 26 °C, about 27 °C, about 28 °C, about 29 °C, or about 30 °C. As used herein, the meaning of "ambient conditions" can include temperatures of about room temperature, relative humidity of from about 20% to about 100%, and barometric pressure of from about 975 millibar (mbar) to about 1050 mbar. For example, relative humidity can be about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64%, about 65%, about 66%, about 67%, about 68%, about 69%, about 70%, about 71%, about 72%, about 73%, about 74%, about 75%, about 76%, about 77%, about 78%, about 79%, about 80%, about 81%, about 82%, about 83%, about 84%, about 85%, about 86%, about 87%, about 88%, about 89%, about 90%, about 91%, about 92%, about 93%, about 94%, about 95%, about 96%, about 97%, about 98%, about 99%, about 100%, or anywhere in between. For example, barometric pressure can be about 975 mbar, about 980 mbar, about 985 mbar, about 990 mbar, about 995 mbar, about 1000 mbar, about 1005 mbar, about 1010 mbar, about 1015 mbar, about 1020 mbar, about 1025 mbar, about 1030 mbar, about 1035 mbar, about 1040 mbar, about 1045 mbar, about 1050 mbar, or anywhere in between.

All ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g. 1 to 6.1, and ending with a maximum value of 10 or less, e.g., 5.5 to 10. Unless stated otherwise, the expression "up to" when referring to the compositional amount of an element means that element is optional and includes a zero percent composition of that particular element. Unless stated otherwise, all compositional percentages are in weight percent (wt.%).

As used herein, the meaning of "a," "an," and "the" includes singular and plural references unless the context clearly dictates otherwise.

In the following examples, aluminum alloy products and their components may be described in terms of their elemental composition in weight percent (wt.%). In each alloy, the remainder is aluminum, with a maximum of 0.15 wt.% for the sum of all impurities.

Incidental elements, such as grain refiners and deoxidizers, or other additives may be present in the invention and may add other characteristics on their own without departing from or significantly altering the alloy described herein or the characteristics of the alloy described herein.

### Aluminum Alloy Products and Methods of Producing Aluminum Alloy Products

As noted above, the composition of a 6xxx series aluminum alloy may, in embodiments, influence the relative proportions of α-phase intermetallic particles and β-phase intermetallic particles that are present in an aluminum alloy product. For example, the presence of and proportions of various alloying elements in a 6xxx series aluminum alloy may tend to stabilize or favor the creation of certain intermetallic particles, such as β-phase intermetallic particles or α-phase intermetallic particles, during casting, homogenization, heat treatment, or the like. Additionally or alternatively, the presence of grain refiners may tend to stabilize or favor the creation of certain intermetallic particles, such as β-phase intermetallic particles or α-phase intermetallic particles. As such, some 6xxx series aluminum alloys may exhibit good corrosion resistance and bond durability performance in their as cast or as prepared condition, such as if they contain large amounts of α-phase stabilizing alloying elements, while other 6xxx series aluminum alloys, such as those containing small amounts of α-phase stabilizing alloying elements, may tend to exhibit poor corrosion resistance and bond durability performance in their as cast or as prepared condition.

Some 6xxx series aluminum alloys that contain relatively smaller amounts of α-phase stabilizing alloying components or that contain relatively larger amounts of β-phase stabilizing alloying elements, however, can be modified through processing techniques and/or alterations of grain refiner compositions (e.g., use of titanium carbide grain refiners) and concentrations to exhibit favorable intermetallic particle phases and distributions that, in turn provide the resultant aluminum alloy products with desirable bond durability and corrosion resistance performance.

By way of non-limiting example, exemplary and non-limiting 6xxx series alloys for use in the methods and products described herein can include AA6101, AA6101A, AA6101B, AA6201, AA6201A, AA6401, AA6501, AA6002, AA6003, AA6103, AA6005, AA6005A, AA6005B, AA6005C, AA6105, AA6205, AA6305, AA6006, AA6106, AA6206, AA6306, AA6008, AA6009, AA6010, AA6110, AA6110A, AA6011, AA6111, AA6013, AA6113, AA6014, AA6015, AA6016, AA6016A, AA6116, AA6019, AA6022, AA6024, AA6027, AA6031, AA6032, AA6151, AA6351, AA6351A, AA6451, AA6951, AA6053, AA6055, AA6056, AA6156, AA6060, AA6160, AA6260, AA6360, AA6460, AA6460B, AA6560, AA6660, AA6061, AA6061A, AA6261, AA6361, AA6162, AA6063, AA6063A, AA6463, AA6463A, AA6763, A6963, AA6069, AA6070, AA6081, AA6181, AA6181A, AA6082, AA6082A, AA6182, AA6091, or AA6092.

α-Phase-stabilizing alloying elements include one or more of copper, chromium, manganese, zirconium, and vanadium. When α-phase-stabilizing alloying elements are present in low concentrations, such as less than 0.2 wt.% total, in a 6xxx series aluminum alloy, casting of the 6xxx series aluminum alloy may tend to result in lower amounts of α-phase intermetallic particles and higher amounts of β-phase intermetallic particles. For example, when a 6xxx series aluminum alloy with a total amount of α-phase-stabilizing alloying elements of less than about 0.2 wt.% is prepared, the amount (e.g., wt.%) of β-phase intermetallic particles may be greater than the amount (e.g., wt.%) of α-phase intermetallic particles. Conversely, when α-phase-stabilizing alloying elements are present in concentrations greater than about 0.2 wt.% total in a 6xxx series aluminum alloy, the resultant aluminum alloy product may tend to contain higher amounts of α-phase intermetallic particles and lower amounts of β-phase intermetallic particles. Example total concentrations of α-phase-stabilizing alloying elements may be from about 0.2 wt.% to about 2.0 wt.%, such as from 0.2 wt.% to 0.3 wt.%, from 0.2 wt.% to 0.4 wt.%, from 0.2 wt.% to 0.5 wt.%, from 0.2 wt.% to 0.6 wt.%, from 0.2 wt.% to 0.7 wt.%, from 0.2 wt.% to 0.8 wt.%, from 0.2 wt.% to 0.9 wt.%, from 0.2 wt.% to 1.0 wt.%, from 0.2 wt.% to 1.1 wt.%, from 0.2 wt.% to 1.2 wt.%, from 0.2 wt.% to 1.3 wt.%, from 0.2 wt.% to 1.4 wt.%, from 0.2 wt.% to 1.5 wt.%, from 0.2 wt.% to 1.6 wt.%, from 0.2 wt.% to 1.7 wt.%, from 0.2 wt.% to 1.8 wt.%, from 0.2 wt.% to 1.9 wt.%, from 0.2 wt.% to 2.0 wt.%, from 0.3 wt.% to 0.4 wt.%, from 0.3 wt.% to 0.5 wt.%, from 0.3 wt.% to 0.6 wt.%, from 0.3 wt.% to 0.7 wt.%, from 0.3 wt.% to 0.8 wt.%, from 0.3 wt.% to 0.9 wt.%, from 0.3 wt.% to 1.0 wt.%, from 0.3 wt.% to 1.1 wt.%, from 0.3 wt.% to 1.2 wt.%, from 0.3 wt.% to 1.3 wt.%, from 0.3 wt.% to 1.4 wt.%, from 0.3 wt.% to 1.5 wt.%, from 0.3 wt.% to 1.6 wt.%, from 0.3 wt.% to 1.7 wt.%, from 0.3 wt.% to 1.8 wt.%, from 0.3 wt.% to 1.9 wt.%, from 0.3 wt.% to 2.0 wt.%, from 0.4 wt.% to 0.5 wt.%, from 0.4 wt.% to 0.6 wt.%, from 0.4 wt.% to 0.7 wt.%, from 0.4 wt.% to 0.8 wt.%, from 0.4 wt.% to 0.9 wt.%, from 0.4 wt.% to 1.0 wt.%, from 0.4 wt.% to 1.1 wt.%, from 0.4 wt. % to 1.2 wt.%, from 0.4 wt.% to 1.3 wt.%, from 0.4 wt.% to 1.4 wt.%, from 0.4 wt.% to 1.5 wt.%, from 0.4 wt.% to 1.6 wt.%, from 0.4 wt.% to 1.7 wt.%, from 0.4 wt.% to 1.8 wt.%, from 0.4 wt.% to 1.9 wt.%, from 0.4 wt.% to 2.0 wt.%, from 0.5 wt.% to 0.6 wt.%, from 0.5 wt.% to 0.7 wt.%, from 0.5 wt.% to 0.8 wt.%, from 0.5 wt.% to 0.9 wt.%, from 0.5 wt.% to 1.0 wt.%, from 0.5 wt.% to 1.1 wt.%, from 0.5 wt.% to 1.2 wt.%, from 0.5 wt.% to 1.3 wt.%, from 0.5 wt.% to 1.4 wt.%, from 0.5 wt.% to 1.5 wt.%, from 0.5 wt.% to 1.6 wt.%, from 0.5 wt.% to 1.7 wt.%, from 0.5 wt.% to 1.8 wt.%, from 0.5 wt.% to 1.9 wt.%, from 0.5 wt.% to 2.0 wt.%, from 0.6 wt.% to 0.7 wt.%, from 0.6 wt.% to 0.8 wt.%, from 0.6 wt.% to 0.9 wt.%, from 0.6 wt.% to 1.0 wt.%, from 0.6 wt.% to 1.1 wt.%, from 0.6 wt.% to 1.2 wt.%, from 0.6 wt.% to 1.3 wt.%, from 0.6 wt.% to 1.4 wt.%, from 0.6 wt.% to 1.5 wt.%, from 0.6 wt.% to 1.6 wt.%, from 0.6 wt.% to 1.7 wt.%, from 0.6 wt.% to 1.8 wt.%, from 0.6 wt.% to 1.9 wt.%, from 0.6 wt.% to 2.0 wt.%, from 0.7 wt.% to 0.8 wt.%, from 0.7 wt.% to 0.9 wt.%, from 0.7 wt.% to 1.0 wt.%, from 0.7 wt.% to 1.1 wt.%, from 0.7 wt.% to 1.2 wt.%, from 0.7 wt.% to 1.3 wt.%, from 0.7 wt.% to 1.4 wt.%, from 0.7 wt.% to 1.5 wt.%, from 0.7 wt.% to 1.6 wt.%, from 0.7 wt.% to 1.7 wt.%, from 0.7 wt.% to 1.8 wt.%, from 0.7 wt.% to 1.9 wt.%, from 0.7 wt.% to 2.0 wt.%, from 0.8 wt.% to 0.9 wt.%, from 0.8 wt.% to 1.0 wt.%, from 0.8 wt.% to 1.1 wt.%, from 0.8 wt.% to 1.2 wt.%, from 0.8 wt.% to 1.3 wt.%, from 0.8 wt.% to 1.4 wt.%, from 0.8 wt.% to 1.5 wt.%, from 0.8 wt.% to 1.6 wt.%, from 0.8 wt.% to 1.7 wt.%, from 0.8 wt.% to 1.8 wt.%, from 0.8 wt.% to 1.9 wt.%, from 0.8 wt.% to 2.0 wt.%, from 0.9 wt.% to 1.0 wt.%, from 0.9 wt.% to 1.1 wt.%, from 0.9 wt.% to 1.2 wt.%, from 0.9 wt.% to 1.3 wt.%, from 0.9 wt.% to 1.4 wt.%, from 0.9 wt.% to 1.5 wt.%, from 0.9 wt.% to 1.6 wt.%, from 0.9 wt.% to 1.7 wt.%, from 0.9 wt.% to 1.8 wt.%, from 0.9 wt.% to 1.9 wt.%, from 0.9 wt.% to 2.0 wt.%, from 1.0 wt.% to 1.1 wt.%, from 1.0 wt.% to 1.2 wt.%, from 1.0 wt.% to 1.3 wt.%, from 1.0 wt.% to 1.4 wt.%, from 1.0 wt.% to 1.5 wt.%, from 1.0 wt.% to 1.6 wt.%, from 1.0 wt.% to 1.7 wt.%, from 1.0 wt.% to 1.8 wt.%, from 1.0 wt.% to 1.9 wt.%, from 1.0 wt.% to 2.0 wt.%, from 1.1 wt.% to 1.2 wt.%, from 1.1 wt.% to 1.3 wt.%, from 1.1 wt.% to 1.4 wt.%, from 1.1 wt.% to 1.5 wt.%, from 1.1 wt.% to 1.6 wt.%, from 1.1 wt.% to 1.7 wt.%, from 1.1 wt.% to 1.8 wt.%, from 1.1 wt.% to 1.9 wt.%, from 1.1 wt.% to 2.0 wt.%, from 1.2 wt.% to 1.3 wt.%, from 1.2 wt.% to 1.4 wt.%, from 1.2 wt.% to 1.5 wt.%, from 1.2 wt.% to 1.6 wt.%, from 1.2 wt.% to 1.7 wt.%, from 1.2 wt.% to 1.8 wt.%, from 1.2 wt.% to 1.9 wt.%, from 1.2 wt.% to 2.0 wt.%, from 1.3 wt.% to 1.4 wt.%, from 1.3 wt.% to 1.5 wt.%, from 1.3 wt.% to 1.6 wt.%, from 1.3 wt.% to 1.7 wt.%, from 1.3 wt.% to 1.8 wt.%, from 1.3 wt.% to 1.9 wt.%, from 1.3 wt.% to 2.0 wt.%, from 1.4 wt.% to 1.5 wt.%, from 1.4 wt.% to 1.6 wt.%, from 1.4 wt.% to 1.7 wt.%, from 1.4 wt.% to 1.8 wt.%, from 1.4 wt.% to 1.9 wt.%, from 1.4 wt.% to 2.0 wt.%, from 1.5 wt.% to 1.6 wt.%, from 1.5 wt.% to 1.7 wt.%, from 1.5 wt.% to 1.8 wt.%, from 1.5 wt.% to 1.9 wt.%, from 1.5 wt.% to 2.0 wt.%, from 1.6 wt.% to 1.7 wt.%, from 1.6 wt.% to 1.8 wt.%, from 1.6 wt.% to 1.9 wt.%, from 1.6 wt.% to 2.0 wt.%, from 1.7 wt.% to 1.8 wt.%, from 1.7 wt.% to 1.9 wt.%, from 1.7 wt.% to 2.0 wt.%, from 1.8 wt.% to 1.9 wt.%, from 1.8 wt.% to 2.0 wt.%, or from 1.9 wt.% to 2.0 wt.%.

A component that influences intermetallic particle formation is excess silicon. Silicon is commonly present in many aluminum alloys. When included in a magnesium containing aluminum alloy, an amount of silicon in excess of that needed to stoichiometrically bond with magnesium as the compound Mg₂Si may be considered excess silicon. In some cases, an amount of silicon considered excess silicon may be an amount of silicon in excess of that needed to bond with magnesium, iron, manganese, and/or chromium. In one example, an excess silicon amount is defined as: excess silicon = (wt.% silicon) - (wt.% magnesium)/1.78 - (wt.% of iron + manganese + chromium)/6. Excess silicon in a 6xxx series aluminum alloy may tend to favor or stabilize creation of β-phase intermetallic particles. Example 6xxx series aluminum alloys described herein may contain excess silicon from about 0.1 wt.% to about 1.4 wt.%, such as from 0.1 wt.% to 0.2 wt.%, 0.1 wt.% to 0.3 wt.%, from 0.1 wt.% to 0.4 wt.%, from 0.1 wt.% to 0.5 wt.%, from 0.1 wt.% to 0.6 wt.%, from 0.1 wt.% to 0.7 wt.%, from 0.1 wt.% to 0.8 wt.%, from 0.1 wt.% to 0.9 wt.%, from 0.1 wt.% to 1.0 wt.%, from 0.1 wt.% to 1.1 wt.%, from 0.1 wt.% to 1.2 wt.%, from 0.1 wt.% to 1.3 wt.%, from 0.1 wt.% to 1.4 wt.%, 0.2 wt.% to 0.3 wt.%, from 0.2 wt.% to 0.4 wt.%, from 0.2 wt.% to 0.5 wt.%, from 0.2 wt.% to 0.6 wt.%, from 0.2 wt.% to 0.7 wt.%, from 0.2 wt.% to 0.8 wt.%, from 0.2 wt.% to 0.9 wt.%, from 0.2 wt.% to 1.0 wt.%, from 0.2 wt.% to 1.1 wt.%, from 0.2 wt.% to 1.2 wt.%, from 0.2 wt.% to 1.3 wt.%, from 0.2 wt.% to 1.4 wt.%, from 0.3 wt.% to 0.4 wt.%, from 0.3 wt.% to 0.5 wt.%, from 0.3 wt.% to 0.6 wt.%, from 0.3 wt.% to 0.7 wt.%, from 0.3 wt.% to 0.8 wt.%, from 0.3 wt.% to 0.9 wt.%, from 0.3 wt.% to 1.0 wt.%, from 0.3 wt.% to 1.1 wt.%, from 0.3 wt.% to 1.2 wt.%, from 0.3 wt.% to 1.3 wt.%, from 0.3 wt.% to 1.4 wt.%, from 0.4 wt.% to 0.5 wt.%, from 0.4 wt.% to 0.6 wt.%, from 0.4 wt.% to 0.7 wt.%, from 0.4 wt.% to 0.8 wt.%, from 0.4 wt.% to 0.9 wt.%, from 0.4 wt.% to 1.0 wt.%, from 0.4 wt.% to 1.1 wt.%, from 0.4 wt.% to 1.2 wt.%, from 0.4 wt.% to 1.3 wt.%, from 0.4 wt.% to 1.4 wt.%, from 0.5 wt.% to 0.6 wt.%, from 0.5 wt.% to 0.7 wt.%, from 0.5 wt.% to 0.8 wt.%, from 0.5 wt.% to 0.9 wt.%, from 0.5 wt.% to 1.0 wt.%, from 0.5 wt.% to 1.1 wt.%, from 0.5 wt.% to 1.2 wt.%, from 0.5 wt.% to 1.3 wt.%, from 0.5 wt.% to 1.4 wt.%, from 0.6 wt.% to 0.7 wt.%, from 0.6 wt.% to 0.8 wt.%, from 0.6 wt.% to 0.9 wt.%, from 0.6 wt.% to 1.0 wt.%, from 0.6 wt.% to 1.1 wt.%, from 0.6 wt.% to 1.2 wt.%, from 0.6 wt.% to 1.3 wt.%, from 0.6 wt.% to 1.4 wt.%, from 0.7 wt.% to 0.8 wt.%, from 0.7 wt.% to 0.9 wt.%, from 0.7 wt.% to 1.0 wt.%, from 0.7 wt.% to 1.1 wt.%, from 0.7 wt.% to 1.2 wt.%, from 0.7 wt.% to 1.3 wt.%, from 0.7 wt.% to 1.4 wt.%, from 0.8 wt.% to 0.9 wt.%, from 0.8 wt.% to 1.0 wt.%, from 0.8 wt.% to 1.1 wt.%, from 0.8 wt.% to 1.2 wt.%, from 0.8 wt.% to 1.3 wt.%, from 0.8 wt.% to 1.4 wt.%, from 0.9 wt.% to 1.0 wt.%, from 0.9 wt.% to 1.1 wt.%, from 0.9 wt.% to 1.2 wt.%, from 0.9 wt.% to 1.3 wt.%, from 0.9 wt.% to 1.4 wt.%, from 1.0 wt.% to 1.1 wt.%, from 1.0 wt.% to 1.2 wt.%, from 1.0 wt.% to 1.3 wt.%, from 1.0 wt.% to 1.4 wt.%, from 1.1 wt.% to 1.2 wt.%, from 1.1 wt.% to 1.3 wt.%, from 1.1 wt.% to 1.4 wt.%, from 1.2 wt.% to 1.3 wt.%, from 1.2 wt.% to 1.4 wt.%, or from 1.3 wt.% to 1.4 wt.%.

In embodiments, the presence of relatively larger amounts of α-phase-stabilizing alloying elements and relatively larger amounts of excess silicon may tend to offset one another with respect to the ratio of α-phase intermetallic particles to β-phase intermetallic particles in a 6xxx series aluminum alloy. Accordingly, the 6xxx series aluminum alloy is characterized by the ratio of the total concentration of α-phase-stabilizing alloying elements to an amount of excess silicon. In embodiments, when this ratio is greater than about 1.0 in a 6xxx series aluminum alloy, α-phase intermetallic particles may be nominally favored over β-phase intermetallic particles. Example ratios of the total concentration of α-phase-stabilizing alloying elements to an amount of excess silicon may be from 1.0 to 1.25, from 1.0 to 1.5, from 1.0 to 1.75, from 1.0 to 2.0, from 1.0 to 2.25, from 1.0 to 2.5, from 1.0 to 2.75, from 1.0 to 3.0, from 1.0 to 3.25, from 1.0 to 3.5, from 1.0 to 3.75, from 1.0 to 4.0, from 1.0 to 4.25, from 1.0 to 4.5, from 1.0 to 4.75, from 1.0 to 5.0, from 1.25 to 1.5, from 1.25 to 1.75, from 1.25 to 2.0, from 1.25 to 2.25, from 1.25 to 2.5, from 1.25 to 2.75, from 1.25 to 3.0, from 1.25 to 3.25, from 1.25 to 3.5, from 1.25 to 3.75, from 1.25 to 4.0, from 1.25 to 4.25, from 1.25 to 4.5, from 1.25 to 4.75, from 1.25 to 5.0, from 1.5 to 1.75, from 1.5 to 2.0, from 1.5 to 2.25, from 1.5 to 2.5, from 1.5 to 2.75, from 1.5 to 3.0, from 1.5 to 3.25, from 1.5 to 3.5, from 1.5 to 3.75, from 1.5 to 4.0, from 1.5 to 4.25, from 1.5 to 4.5, from 1.5 to 4.75, from 1.5 to 5.0, from 1.75 to 2.0, from 1.75 to 2.25, from 1.75 to 2.5, from 1.75 to 2.75, from 1.75 to 3.0, from 1.75 to 3.25, from 1.75 to 3.5, from 1.75 to 3.75, from 1.75 to 4.0, from 1.75 to 4.25, from 1.75 to 4.5, from 1.75 to 4.75, from 1.75 to 5.0, from 2.0 to 2.25, from 2.0 to 2.5, from 2.0 to 2.75, from 2.0 to 3.0, from 2.0 to 3.25, from 2.0 to 3.5, from 2.0 to 3.75, from 2.0 to 4.0, from 2.0 to 4.25, from 2.0 to 4.5, from 2.0 to 4.75, from 2.0 to 5.0, from 2.25 to 2.5, from 2.25 to 2.75, from 2.25 to 3.0, from 2.25 to 3.25, from 2.25 to 3.5, from 2.25 to 3.75, from 2.25 to 4.0, from 2.25 to 4.25, from 2.25 to 4.5, from 2.25 to 4.75, from 2.25 to 5.0, from 2.5 to 2.75, from 2.5 to 3.0, from 2.5 to 3.25, from 2.5 to 3.5, from 2.5 to 3.75, from 2.5 to 4.0, from 2.5 to 4.25, from 2.5 to 4.5, from 2.5 to 4.75, from 2.5 to 5.0, from 2.75 to 3.0, from 2.75 to 3.25, from 2.75 to 3.5, from 2.75 to 3.75, from 2.75 to 4.0, from 2.75 to 4.25, from 2.75 to 4.5, from 2.75 to 4.75, from 2.75 to 5.0, from 3.0 to 3.25, from 3.0 to 3.5, from 3.0 to 3.75, from 3.0 to 4.0, from 3.0 to 4.25, from 3.0 to 4.5, from 3.0 to 4.75, from 3.0 to 5.0, from 3.25 to 3.5, from 3.25 to 3.75, from 3.25 to 4.0, from 3.25 to 4.25, from 3.25 to 4.5, from 3.25 to 4.75, from 3.25 to 5.0, from 3.5 to 3.75, from 3.5 to 4.0, from 3.5 to 4.25, from 3.5 to 4.5, from 3.5 to 4.75, from 3.5 to 5.0, from 3.75 to 4.0, from 3.75 to 4.25, from 3.75 to 4.5, from 3.75 to 4.75, from 3.75 to 5.0, from 4.0 to 4.25, from 4.0 to 4.5, from 4.0 to 4.75, from 4.0 to 5.0, from 4.25 to 4.5, from 4.25 to 4.75, from 4.25 to 5.0, from 4.5 to 4.75, from 4.5 to 5.0, or from 4.75 to 5.0.

In embodiments, the ratio of the concentrations of magnesium and silicon may be used for or result in modifying relative amounts of α-phase intermetallic particles and β-phase intermetallic particles in a 6xxx series aluminum alloy. Example ratios of the concentrations of magnesium to silicon may be from 0.25 to 0.5, from 0.25 to 0.75, from 0.25 to 1.0, from 0.25 to 1.25, from 0.25, to 1.5, from 0.25 to 1.75, from 0.25 to 2.0, from 0.25 to 2.25, from 0.25 to 2.5, from 0.25 to 2.75, from 0.25 to 3.0, from 0.25 to 3.25, from 0.25 to 3.5, from 0.25 to 3.75, from 0.25 to 4.0, from 0.5 to 0.75, from 0.5, to 1.0, from 0.5 to 1.25, from 0.5 to 1.5, from 0.5 to 1.75, from 0.5 to 2.0, from 0.5 to 2.25, from 0.5 to 2.5, from 0.5 to 2.75, from 0.5 to 3.0, from 0.5 to 3.25, from 0.5 to 3.5, from 0.5 to 3.75, from 0.5 to 4.0, from 0.75 to 1.0, from 0.75 to 1.25, from 0.75 to 1.5, from 0.75 to 1.75, from 0.75 to 2, from 0.75 to 2.25, from 0.75 to 2.5, from 0.75 to 2.75, from 0.75 to 3, from 0.75 to 3.25, from 0.75 to 3.5, from 0.75 to 3.75, from 0.75 to 4.0, from 1.0 to 1.25, from 1.0 to 1.5, from 1.0 to 1.75, from 1.0 to 2.0, from 1.0 to 2.25, from 1.0 to 2.5, from 1.0 to 2.75, from 1.0 to 3.0, from 1.0 to 3.25, from 1.0 to 3.5, from 1.0 to 3.75, from 1.0 to 4.0, from 1.25 to 1.5, from 1.25 to 1.75, from 1.25 to 2.0, from 1.25 to 2.25, from 1.25 to 2.5, from 1.25 to 2.75, from 1.25 to 3.0, from 1.25 to 3.25, from 1.25 to 3.5, from 1.25 to 3.75, from 1.25 to 4.0, from 1.5 to 1.75, from 1.5 to 2.0, from 1.5 to 2.25, from 1.5 to 2.5, from 1.5 to 2.75, from 1.5 to 3.0, from 1.5 to 3.25, from 1.5 to 3.5, from 1.5 to 3.75, from 1.5 to 4.0, from 1.75 to 2.0, from 1.75 to 2.25, from 1.75 to 2.5, from 1.75 to 2.75, from 1.75 to 3.0, from 1.75 to 3.25, from 1.75 to 3.5, from 1.75 to 3.75, from 1.75 to 4.0, from 2.0 to 2.25, from 2.0 to 2.5, from 2.0 to 2.75, from 2.0 to 3.0, from 2.0 to 3.25, from 2.0 to 3.5, from 2.0 to 3.75, from 2.0 to 4.0, from 2.25 to 2.5, from 2.25 to 2.75, from 2.25 to 3.0, from 2.25 to 3.25, from 2.25 to 3.5, from 2.25 to 3.75, from 2.25 to 4.0, from 2.5 to 2.75, from 2.5 to 3.0, from 2.5 to 3.25, from 2.5 to 3.5, from 2.5 to 3.75, from 2.5 to 4.0, from 2.75 to 3.0, from 2.75 to 3.25, from 2.75 to 3.5, from 2.75 to 3.75, from 2.75 to 4.0, from 3.0 to 3.25, from 3.0 to 3.5, from 3.0 to 3.75, from 3.0 to 4.0, from 3.25 to 3.5, from 3.25 to 3.75, from 3.25 to 4.0, from 3.5 to 3.75, from 3.5 to 4.0, or from 3.75 to 4.0.

In some cases, the composition and concentration of grain refiners may also contribute to the formation of different intermetallic particle phases. For example, boron grain refiners may promote formation of β-phase intermetallic particles, and so it may be desirable to reduce, eliminate, or avoid boron grain refiner in the alloy composition. Optionally, the 6xxx series aluminum alloys used may include no or only relatively low amounts of boron grain refiners, such as less than 0.15 wt.%. In some examples, the 6xxx series aluminum alloy is free of or substantially free of boron. In contrast, carbide grain refiners may promote formation of α-phase intermetallic particles, and so it may be desirable to add or substitute carbide grain refiners into the alloy composition. Optionally, the 6xxx series aluminum alloys used may include up to 10 parts per million of a carbide grain refiner.

As described above, a larger relative amount of β-phase intermetallic particles than α-phase intermetallic particles may contribute to low corrosion resistance in some aluminum alloy products and/or to poor bond durability performance. In some embodiments, 6xxx series aluminum alloys having overall compositions that favor β-phase intermetallic particles formation during conventional preparation can be modified to increase the relative amounts of α-phase intermetallic particles and decrease the relative amounts of β-phase intermetallic particles, resulting in an aluminum alloy product that exhibits better corrosion resistance and better bond durability. For example, the casting practice (e.g., casting temperature, casting rate, casting geometry), homogenization practice (e.g., homogenization time, homogenization temperature), rolling practice (e.g., number of hot rolling passes, thickness reduction at each hot rolling pass, temperature of each hot rolling pass, number of cold rolling passes, thickness reduction at each cold rolling pass, temperature of each cold rolling pass), annealing and heat treatment practice (e.g., annealing or heat treatment time, annealing or heat treatment temperature, quenching temperature, quench rate), or the like can be modified to favor formation of α-phase intermetallic particles over β-phase intermetallic particles.

Advantageously, the disclosed aluminum alloy products have a weight percent ratio of α-phase intermetallic particles to β-phase intermetallic particles that is greater than 2, or greater than or about 3.

The α-phase intermetallic particles and β-phase intermetallic particles in the aluminum alloy products may have any suitable dimensions. For example, an average or median size (e.g., cross-sectional dimension, diameter, or the like) of the α-phase intermetallic particles or the β-phase intermetallic particles may be from 3 µm to 5 µm. In general, the α-phase intermetallic particles may have a more spheroidal shape than the β-phase intermetallic particles, while the β-phase intermetallic particles may have a more platelike or needle-like shape than the α-phase intermetallic particles. The shape of the α-phase intermetallic particles or the β-phase intermetallic particles may be characterized by an aspect ratio of the particles, such as a ratio of the length of the longest dimension of the particle to the length of the shortest dimension of the particle. As examples, α-phase intermetallic particles may be characterized by an aspect ratio of from 1 to 1.5 and the β-phase intermetallic particles may be characterized by an aspect ratio greater than 2 (e.g., from 2 to 100).

The aluminum alloy products may have any suitable materials properties, such as ultimate tensile strength, yield strength, uniform elongation, total elongation, or the like. As an example, an ultimate tensile strength of the disclosed aluminum alloy products may be from 200 MPa to 450 MPa. As another example, a yield strength of the disclosed aluminum alloy products may be from 100 MPa to 400 MPa. As another example, a uniform elongation of the disclosed aluminum alloy products may be from 18% to 28%. As another example, a total elongation of the disclosed aluminum alloy products may be from 20% to 32%.

The aluminum alloy products described herein can be prepare using suitable methods. The aluminum alloy product may be cast, homogenized, hot-rolled, cold-rolled, heat treated, formed, or the like. The aluminum alloy product may be subjected to processing conditions that modify or control the weight percent ratio of the α-phase intermetallic particles to the β-phase intermetallic particles in the aluminum alloy product to be greater than 1. Detailed description of example methods for preparing the disclosed aluminum alloy products are described in U.S. Provisional Application No. 62/984,675, filed on the March 3, 2020.

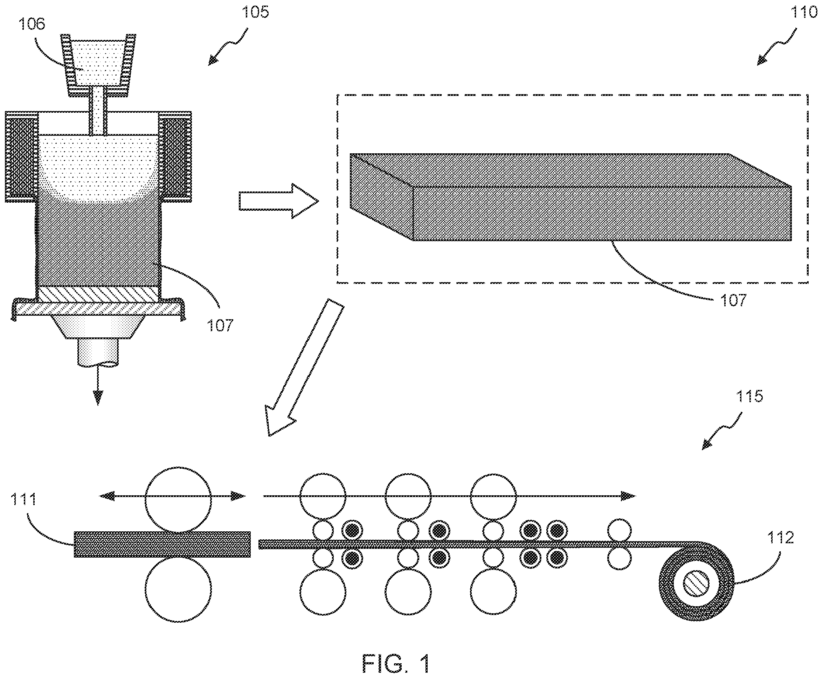

FIG. 1 provides an overview of an example method of making an aluminum alloy product. The method of FIG. 1 begins at 105, where an aluminum alloy 106 is cast to form a cast aluminum alloy product 107, such as an ingot or other cast product. At 110, the cast aluminum alloy product 107 is homogenized to form a homogenized aluminum alloy product 111. In some cases, the homogenization process and casting process are combined as casting with *in-situ* homogenization. At 115, the homogenized aluminum alloy product 111 is subjected to one or more hot rolling passes and/or one or more cold rolling passes to form a rolled aluminum alloy product 112, which may correspond to an aluminum alloy article, such as an aluminum alloy plate, an aluminum alloy shate, or an aluminum alloy sheet. Optionally, the rolled aluminum alloy product 112 is subjected to solution heat treating and/or to one or more forming or stamping processes to form an aluminum alloy article.

Non-limiting examples of casting processes include a direct chill (DC) casting process or a continuous casting (CC) process. For example, FIG. 1 depicts a schematic illustration of a DC casting process at 105. A continuous casting system can include a pair of moving opposed casting surfaces (e.g., moving opposed belts, rolls or blocks), a casting cavity between the pair of moving opposed casting surfaces, and a molten metal injector. The molten metal injector can have an end opening from which molten metal can exit the molten metal injector and be injected into the casting cavity.

A cast aluminum alloy product, such as a cast ingot or other cast product, can be processed by any means known to those of ordinary skill in the art. Optionally, the processing steps can be used to prepare sheets. Example optional processing steps include, but are not limited to, homogenization, hot rolling, cold rolling, annealing, solution heat treatment, and pre-aging.

In a homogenization step, a cast product may be heated to a temperature ranging from about 400 °C to about 600 °C. For example, the cast product can be heated to a temperature of about 400 °C, about 410 °C, about 420 °C, about 430 °C, about 440 °C, about 450 °C, about 460 °C, about 470 °C, about 480 °C, about 490 °C, about 500 °C, about 510 °C, about 520 °C, about 530 °C, about 540 °C, about 550 °C, about 560 °C, about 570 °C, about 580 °C, about 590 °C, or about 600 °C. The product may then be allowed to soak (i.e., held at the indicated temperature) for a period of time to form a homogenized product. In some examples, the total time for the homogenization step, including the heating and soaking phases, can be up to 24 hours. For example, the product can be heated up to 500 °C to 600 °C, and soaked, for a total time of up to 18 hours for the homogenization step. Optionally, the product can be heated to below 490 °C and soaked, for a total time of greater than 18 hours for the homogenization step. In some cases, the homogenization step comprises multiple processes. In some non-limiting examples, the homogenization step includes heating a cast product to a first temperature for a first period of time followed by heating to a second temperature for a second period of time. For example, a cast product can be heated to about 465 °C for about 3.5 hours and then heated to about 480 °C for about 6 hours.

Following a homogenization step, a hot rolling step can be optionally performed. Prior to the start of hot rolling, the homogenized product can be allowed to cool to a temperature between 300 °C to 450 °C. For example, the homogenized product can be allowed to cool to a temperature of between 325 °C to 425 °C or from 350 °C to 400 °C. The homogenized product can then be hot rolled at a temperature between 300 °C to 450 °C to form a hot rolled plate, a hot rolled shate or a hot rolled sheet having a gauge between 3 mm and 200 mm (e.g., 3 mm, 4 mm, 5 mm, 6 mm, 7 mm, 8 mm, 9 mm, 10 mm, 15 mm, 20 mm, 25 mm, 30 mm, 35 mm, 40 mm, 45 mm, 50 mm, 55 mm, 60 mm, 65 mm, 70 mm, 75 mm, 80 mm, 85 mm, 90 mm, 95 mm, 100 mm, 110 mm, 120 mm, 130 mm, 140 mm, 150 mm, 160 mm, 170 mm, 180 mm, 190 mm, 200 mm, or anywhere in between).

Optionally, the cast product can be a continuously cast product that can be allowed to cool to a temperature between 300 °C to 450 °C. For example, the continuously cast product can be allowed to cool to a temperature of between 325 °C to 425 °C or from 350 °C to 400 °C. The continuously cast products can then be hot rolled at a temperature between 300 °C to 450 °C to form a hot rolled plate, a hot rolled shate or a hot rolled sheet having a gauge between 3 mm and 200 mm (e.g., 3 mm, 4 mm, 5 mm, 6 mm, 7 mm, 8 mm, 9 mm, 10 mm, 15 mm, 20 mm, 25 mm, 30 mm, 35 mm, 40 mm, 45 mm, 50 mm, 55 mm, 60 mm, 65 mm, 70 mm, 75 mm, 80 mm, 85 mm, 90 mm, 95 mm, 100 mm, 110 mm, 120 mm, 130 mm, 140 mm, 150 mm, 160 mm, 170 mm, 180 mm, 190 mm, 200 mm, or anywhere in between). During hot rolling, temperatures and other operating parameters can be controlled so that the temperature of the hot rolled intermediate product upon exit from the hot rolling mill is no more than 470 °C, no more than 450 °C, no more than 440 °C, or no more than 430 °C.

Cast, homogenized, or hot-rolled products can be optionally cold rolled using cold rolling mills into thinner products, such as a cold rolled sheet. The cold rolled product can have a gauge between about 0.5 to 10 mm, e.g., between about 0.7 to 6.5 mm. Optionally, the cold rolled product can have a gauge of 0.5 mm, 1.0 mm, 1.5 mm, 2.0 mm, 2.5 mm, 3.0 mm, 3.5 mm, 4.0 mm, 4.5 mm, 5.0 mm, 5.5 mm, 6.0 mm, 6.5 mm, 7.0 mm, 7.5 mm, 8.0 mm, 8.5 mm, 9.0 mm, 9.5 mm, or 10.0 mm. The cold rolling can be performed to result in a final gauge thickness that represents a gauge reduction of up to 85% (e.g., up to 10%, up to 20%, up to 30%, up to 40%, up to 50%, up to 60%, up to 70%, up to 80%, or up to 85% reduction) as compared to a gauge prior to the start of cold rolling. Optionally, an interannealing step can be performed during the cold rolling step, such as where a first cold rolling process is applied, followed by an annealing process (interannealing), followed by a second cold rolling process. The interannealing step can be performed at a temperature of from about 300 °C to about 450 °C (e.g., about 310 °C, about 320 °C, about 330 °C, about 340 °C, about 350 °C, about 360 °C, about 370 °C, about 380 °C, about 390 °C, about 400 °C, about 410 °C, about 420 °C, about 430 °C, about 440 °C, or about 450 °C). In some cases, the interannealing step comprises multiple processes. In some non-limiting examples, the interannealing step includes heating the partially cold rolled product to a first temperature for a first period of time followed by heating to a second temperature for a second period of time. For example, the partially cold rolled product can be heated to about 410 °C for about 1 hour and then heated to about 330 °C for about 2 hours.

Subsequently, a cast, homogenized, or rolled product can optionally undergo a solution heat treatment step. The solution heat treatment step can be any suitable treatment for the product that results in solutionizing of soluble particles. The cast, homogenized, or rolled product can be heated to a peak metal temperature (PMT) of up to 590 °C (e.g., from 400 °C to 590 °C) and soaked for a period of time at the PMT to form a hot product. For example, the cast, homogenized, or rolled product can be soaked at 480 °C for a soak time of up to 30 minutes (e.g., 0 seconds, 60 seconds, 75 seconds, 90 seconds, 5 minutes, 10 minutes, 20 minutes, 25 minutes, or 30 minutes). After heating and soaking, the hot product is rapidly cooled at rates greater than 200 °C/s to a temperature between 500 and 200 °C to form a heat-treated product. In one example, the hot product is cooled at a quench rate of above 200 °C/second at temperatures between 450 °C and 200 °C. Optionally, the cooling rates can be faster in other cases.

After quenching, the heat-treated product can optionally undergo a pre-aging treatment, such as by reheating before coiling. The pre-aging treatment can be performed at a temperature of from about 70 °C to about 125 °C for a period of time of up to 6 hours. For example, the pre-aging treatment can be performed at a temperature of about 70 °C, about 75 °C, about 80 °C, about 85 °C, about 90 °C, about 95 °C, about 100 °C, about 105 °C, about 110 °C, about 115 °C, about 120 °C, or about 125 °C. Optionally, the pre-aging treatment can be performed for about 30 minutes, about 1 hour, about 2 hours, about 3 hours, about 4 hours, about 5 hours, or about 6 hours. The pre-aging treatment can be carried out by passing the heat-treated product through a heating device, such as a device that emits radiant heat, convective heat, induction heat, infrared heat, or the like.

The cast products described herein can be used to make products in the form of sheets, plates, or other suitable products. For example, plates including the products as described herein can be prepared by processing an ingot in a homogenization step or casting a product in a continuous caster followed by a hot rolling step. In the hot rolling step, the cast product can be hot rolled to a 200 mm thick gauge or less (e.g., from about 10 mm to about 200 mm). For example, the cast product can be hot rolled to a plate having a final gauge thickness of about 10 mm to about 175 mm, about 15 mm to about 150 mm, about 20 mm to about 125 mm, about 25 mm to about 100 mm, about 30 mm to about 75 mm, or about 35 mm to about 50 mm. In some cases, plates may be rolled into thinner metal products, such as sheets.

### Methods of Using the Disclosed Aluminum Alloy Products

The aluminum alloy products described herein can be used in automotive applications and other transportation applications, including aircraft and railway applications. For example, the disclosed aluminum alloy products can be used to prepare automotive structural parts, such as bumpers, side beams, roof beams, cross beams, pillar reinforcements (e.g., A-pillars, B-pillars, and C-pillars), inner panels, outer panels, side panels, inner hoods, outer hoods, or trunk lid panels. The aluminum alloy products and methods described herein can also be used in aircraft or railway vehicle applications, to prepare, for example, external and internal panels.

The aluminum alloy products and methods described herein can also be used in electronics applications. For example, the aluminum alloy products and methods described herein can be used to prepare housings for electronic devices, including mobile phones and tablet computers. In some examples, the aluminum alloy products can be used to prepare housings for the outer casing of mobile phones (e.g., smart phones), tablet bottom chassis, and other portable electronics.

The aluminum alloy products and methods described herein can be used in any other desired application.

### Methods of Characterizing Aluminum Alloy Products

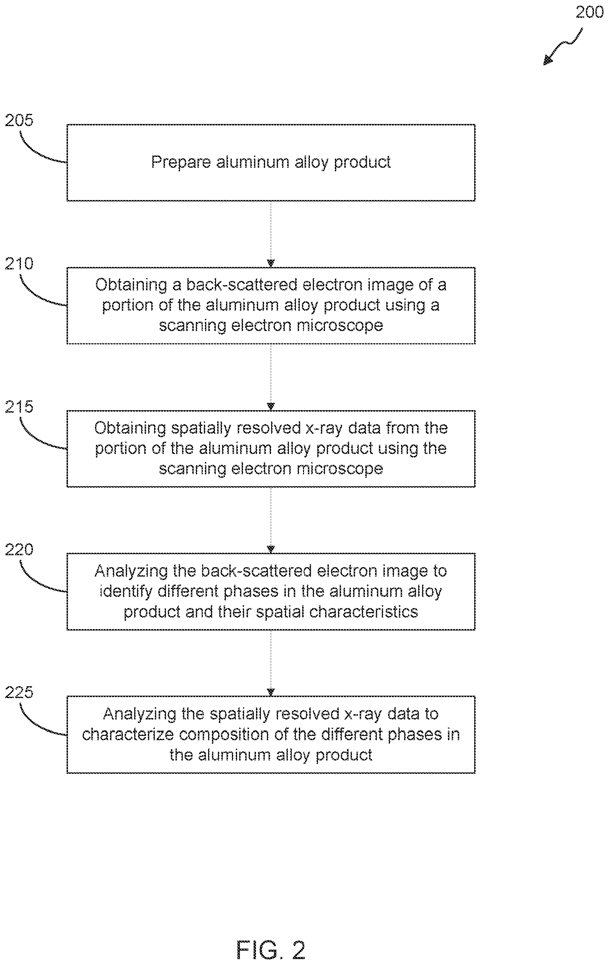

Any suitable methods for determining the ratio and amounts of different intermetallic particles can be used to characterize aluminum alloy products, such as to determine whether a particular aluminum alloy product comprising a 6xxx series aluminum alloy includes more α-phase intermetallic particles than the β-phase intermetallic particles (e.g., more by weight or mass, more by number, more by volume). FIG. 2 provides an overview of an example method for characterizing an aluminum alloy product. At block 205, the aluminum alloy product is prepared. Any desirable technique for preparing the aluminum alloy product may be used, such as those described herein or in U.S. Provisional Application No. 62/984,675, filed on March 3, 2020.

At block 210, an electron micrograph image of one or more portions of the aluminum alloy product may be obtained using a scanning electron microscope. For example, a back-scattered electron image may be obtained, which may be useful for identifying various phases, grains, and particles and their distributions within the aluminum alloy sample. In some cases, a variety of images may be obtained, such as to provide a representative sampling of the aluminum alloy product.

At block 215, spatially resolved x-ray data of one or more portions of the aluminum alloy product may be obtained using a scanning electron microscope. In some cases, though optionally, the spatially resolved x-ray data is obtained on the same portion of the aluminum alloy product as the electron micrograph image. In this way, the x-ray data can be used to characterize a composition of the portion of the aluminum alloy product that is observed in the electron micrograph image.

At block 220, the electron micrograph image may be analyzed to identify different phases and particles within the portion of the aluminum alloy product. In some cases, different types of particles or phases within the sample may exhibit characteristic appearances in the electron micrograph image. By analyzing the electron micrograph image, the number and area, volume, or mass of the different phases or particles may be identified and/or approximated.

At block 225, the x-ray data may be analyzed to identify compositions of the different phases and particles within the portion of the aluminum alloy product. In some cases, different types of particles or phases within the sample may exhibit characteristic x-ray signatures. By analyzing the x-ray data, the composition of the different phases or particles may be determined.

When the analyses of the x-ray data and the electron micrograph images are complete, quantitative or qualitative information can be used to characterize and/or compare different aluminum alloy products. For example, the quantitative or qualitative information can be used to determine whether the aluminum alloy product has more α-phase intermetallic particles than β-phase intermetallic particles or whether one aluminum alloy product has a different distribution of α-phase intermetallic particles and β-phase intermetallic particles than another aluminum alloy product.

### Adhesively Bonded Aluminum Alloy Products

As noted above, the disclosed aluminum alloy products may exhibit improve bonding performance when incorporated into a joined aluminum alloy product. For example, the aluminum alloy products described herein may be adhesively bonded to another product, such as another aluminum alloy product, to form a joined product, and the strength, longevity, or durability, of the bond may be of a desirable magnitude and be greater than that of comparable joined aluminum alloy products.

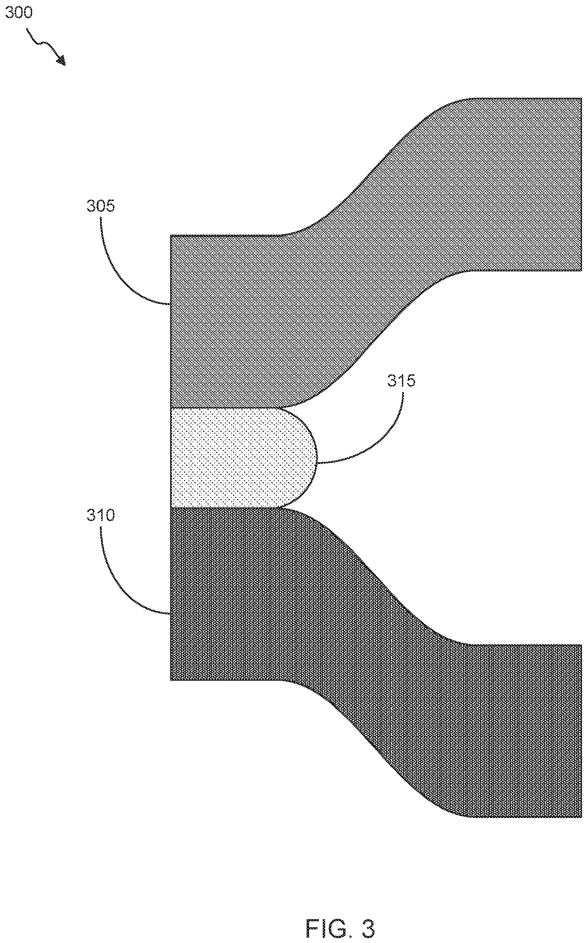

FIG. 3 provides a schematic illustration of a joined aluminum alloy product 300, where an aluminum alloy product 305 is joined to a second product 310 by an adhesive 315. Second product 315 may optionally be another aluminum alloy product similar to or identical to aluminum alloy product 305, though second product 310 may optionally be a different aluminum alloy product or may not be an aluminum alloy product. Although aluminum alloy product 305 and second product 310 are shown in formed configurations in FIG. 3, one or both of aluminum alloy product 305 and second product 310 may optionally be in an unformed (e.g., planar) configuration. Further, while adhesive 315 is shown as only partially disposed between aluminum alloy product 305 and second product 310 (i.e., not covering an entire area between aluminum alloy product 305 and second product 310), embodiments are contemplated where adhesive 315 is located at the entire area, or substantially the entire area between aluminum alloy product 305 and second product 310. For example, adhesive 315 may be present at greater than 60%, greater than 70%, greater than 80%, or greater than 90% of the overlapping area between aluminum alloy product 305 and second product 310. Example adhesives useful for joining an aluminum alloy product to another product may include epoxies, acrylates, methacrylates, acrylic, adhesive tapes, polyamides, anaerobic (thread lock) adhesives, UV curable adhesives and polymers, urethanes, phenolic adhesives, sealants, silicons, such as acetate, benzamide, enoxy, ester, oxime, or amine crosslinkable or curable silicones, polysulfides, silane modified polymers, polyethers, polyurethanes, hot melt adhesives, thermoplastic polymers, amorphous poly alpha olefins, pressure sensitive adhesives, polyamides, hot melt polyurethanes, or the like. Advantageously, adhesive 315 may strongly bind with surfaces of aluminum alloy product 305 and second product 310 and provide for a high-strength and durable joint between aluminum alloy product 305 and second product 310.

Intermetallic particles in the aluminum alloy product 305 may serve as corrosion initiation, crack initiation, or crack propagation sites. The presence of the α-phase particles and β-phase particles in the aluminum alloy product may thus contribute to the durability, or lack of durability, of the bond or joint between aluminum alloy product 305 and second product 310. For example, β-phase particles that are present in aluminum alloy product 305 may preferentially serve as corrosion initiation sites. However, when β-phase particles are present in low amounts, such as when weight percent ratio of the α-phase intermetallic particles to the β-phase intermetallic particles in the aluminum alloy product is greater than 1, the amount or extent of corrosion may be limited such that the durability of a bond or joint the bond or joint between aluminum alloy product 305 and second product 310 may be improved over aluminum alloy products having weight percent ratio of α-phase intermetallic particles to β-phase intermetallic particles that is less than 1.

In some cases, a self-assembled monolayer of some phosphorus-containing organic acids may reduce an affinity for adhesion with various adhesives, such as epoxy adhesives, polyurethane adhesives, phenolic adhesives, or acrylate adhesives. For example, a self-assembled monolayer of a phosphorus-containing organic acid that does not contain hydrophilic functionality (e.g., an unsubstituted alkyl phosphonic acid) may provide an adhesive-resistant surface to an aluminum alloy product. In some cases, portions of an aluminum alloy product may be pretreated, such as to chemically modify surface characteristics. For example, the aluminum alloy product may have an adhesion promoter thereon, such as to increase or promote interaction between a surface of the aluminum alloy product and an adhesive. In some examples, a self-assembled monolayer of a phosphorus-containing organic acid with hydrophilic functionality may impart an adhesive promoting character to a surface of the aluminum alloy product. In some cases, portions of an aluminum alloy product may be pretreated to have a self-assembled monolayer of a phosphorus-containing organic acid with hydrophilic functionality to allow for good interaction with an adhesive, while other portions of the aluminum alloy product may be pretreated to have a self-assembled monolayer of a phosphorus-containing organic acid with no hydrophilic functionality to allow for poor or only limited interaction with the adhesive. In this way, portions of the aluminum alloy product may have a "non-stick," "non-adhesive," "antifouling," or "self-cleaning" character, which may be useful for modifying a strength of a join between the aluminum alloy product and another product or for providing regions of the surface with these additional characteristics. Use of phosphorus-containing organic acid with no hydrophilic functionality may be useful for generating surfaces with low surface energy, low surface activity, or low surface reactivity, providing non-stick, non-adhesive, antifouling, or self-cleaning characteristics, for example.

Advantageously, a joined aluminum alloy product may exhibit improved bond durability between the aluminum alloy product and the second product as compared to comparable bond between a comparable aluminum alloy product joined to a comparable second product by the same adhesive, such as when the comparable aluminum alloy product that has the same overall composition as the aluminum alloy product except that the comparable aluminum alloy product has a concentration of α-phase-stabilizing alloying elements of less than 0.5 wt.%, and a weight percent ratio of α-phase intermetallic particles to β-phase intermetallic particles of less than 1. For example, the comparable aluminum alloy product may correspond to the aluminum alloy product that is not treated to modify the ratio or concentration of α-phase intermetallic particles to β-phase intermetallic particles to transform β-phase intermetallic particles into α-phase intermetallic particles to achieve a higher amount of β-phase intermetallic particles than α-phase intermetallic particles.

The following examples will serve to further illustrate the present invention without, at the same time, however, constituting any limitation thereof. During the studies described in the following examples, conventional procedures were followed, unless otherwise stated. Some of the procedures are described below for illustrative purposes.

### EXAMPLE 1

Three different AA6451 aluminum alloys were prepared for evaluating the ability of α-stabilizing elements to modify the ratio of α-phase intermetallic particles to β-phase intermetallic particles. One alloy was a control alloy, where the concentrations of chromium and manganese in the alloy were limited to trace levels, one test alloy included added manganese at a concentration of 0.13 wt.%, and one test alloy included added manganese and chromium at a concentration of 0.13 wt.% Mn and 0.06 wt.% Cr. Samples of each alloy were subjected to various homogenization conditions and the phase distribution of α-phase intermetallic particles to β-phase intermetallic particles by area were determined and used to identify a ratio of the amount of α-phase intermetallic particles to β-phase intermetallic particles in each sample. The results are summarized in Table 1.

**Table 1.**

| Composition | Ratio of α-phase to β-phase after homogenization | | | | |
|---|---|---|---|---|---|
| | As-cast | 530 °C-10 hrs | 560 °C-6 hrs | 560 °C-10 hrs | 570 °C-4 hrs |
| Control Alloy | 0.06 | 0.06 | 0.53 | 0.77 | 1.6 |
| Added Mn | 0.06 | 0.21 | 2.7 | 4.3 | 2.2 |
| Added Mn and Cr | 0.20 | 0.32 | 3.3 | 5.0 | 2.4 |

### EXAMPLE 2

Eight samples of rolled sheet metal of two different AA6451 aluminum alloys were prepared to evaluate the ability of α-stabilizing elements to modify the bonding performance of the alloys. One alloy was a control alloy, where the concentrations of chromium and manganese in the alloy were limited to trace levels, and one alloy was a test alloy, which included added chromium and manganese of 0.08 wt.% and 0.13 wt.%, respectively. Samples of the control alloy and the test alloy were processed according to a first casting, homogenization, and rolling conditions (process condition 1) where the coiling/rewind temperature is above a recrystallization temperature of the alloy; samples of the control alloy and the test alloy were processed according to a second casting, homogenization and rolling conditions (process condition 2) where the coiling/rewind temperature is below a recrystallization temperature of the alloy.

Duplicative samples were subjected to bond durability testing. For example, the procedures according to ASTM D3762-03(2010), Standard Test Method for Adhesive-Bonded Surface Durability of Aluminum (Wedge Test) (Withdrawn 2019), ASTM International, West Conshohocken, PA, 2010, hereby incorporated by reference, may be followed. As another example a FLTM BV 101-07 standard test, Stress Durability Test for Adhesive Lap-Sear Bonds (2017), hereby incorporated by reference, may be used. For these tests, pairs of samples of the rolled sheet metal are adhesively bonded together using epoxy at six bonding sites. Next, each bonded pair is subjected to a variety of test conditions. For example, the test conditions may include one or more of immersion in a salt solution, exposure to humid conditions, exposure to dry conditions, or application of a force inducing stress or strain. Each bonded pair is subjected to numerous cycles of these test conditions. Generally, each bonded pair is subjected to a sufficient number of cycles to reach a bond failure. In some cases, a maximum number of cycles is used, such as 35, 45, or 60 cycles. Results of the bond durability tests for two different testing conditions are provided in Tables 2 and 3. The results generally showed an improvement in bond durability for samples of the alloys including added manganese and chromium as compared to the control alloy.

**Table 2. Bond durability test results for testing at a relative humidity less than 90%**

| Composition | Process Condition | Completed Number of Cycles Until Failure (Maximum 60) | | | | | |
|---|---|---|---|---|---|---|---|
| Control Alloy | 1 | 26 | 26 | 26 | 19 | 18 | 11 |
| Control Alloy | 1 | 20 | 20 | 18 | 20 | 13 | 14 |
| Added Mn and Cr | 1 | 36 | 35 | 28 | 23 | 36 | 35 |
| Added Mn and Cr | 1 | 29 | 23 | 29 | 29 | 24 | 24 |
| Control Alloy | 2 | 18 | 12 | 18 | 18 | 13 | 11 |
| Control Alloy | 2 | 28 | 28 | 23 | 15 | 28 | 14 |
| Added Mn and Cr | 2 | 60 | 60 | 60 | 60 | 60 | 60 |
| Added Mn and Cr | 2 | 60 | 60 | 56 | 60 | 27 | 52 |

**Table 3. Bond durability test results for testing at a relative humidity of 90%**

| Composition | Process Condition | Completed Number of Cycles Until Failure (Maximum 35) | | | | | |
|---|---|---|---|---|---|---|---|
| Control Alloy | 1 | 33 | 33 | 24 | 30 | 20 | 15 |
| Control Alloy | 1 | 19 | 19 | 19 | 13 | 16 | 15 |
| Added Mn and Cr | 1 | 35 | 35 | 24 | 35 | 35 | 30 |
| Added Mn and Cr | 1 | 35 | 35 | 35 | 35 | 35 | 35 |
| Control Alloy | 2 | 35 | 35 | 35 | 35 | 35 | 35 |
| Control Alloy | 2 | 35 | 35 | 35 | 35 | 35 | 35 |
| Added Mn and Cr | 2 | 33 | 33 | 33 | 33 | 33 | 31 |
| Added Mn and Cr | 2 | 33 | 33 | 33 | 33 | 33 | 28 |

The foregoing description of the embodiments, including illustrated embodiments, has been presented only for the purpose of illustration and description and is not intended to be exhaustive or limiting to the precise forms disclosed. Numerous modifications, adaptations, and uses thereof will be apparent to those skilled in the art.

Aspect 13 is the aluminum alloy product of any previous or subsequent aspect, wherein a ratio of the total concentration of α-phase-stabilizing stabilizing elements to iron in the α-phase intermetallic particles is greater than 0.5.

Aspect 14 is the aluminum alloy product of any previous or subsequent aspect, wherein the β-phase intermetallic particles exhibit an aspect ratio greater than 2, and wherein the α-phase intermetallic particles exhibit an aspect ratio of from 1 to 1.5.

Aspect 15 is the aluminum alloy product of any previous or subsequent aspect, wherein the β-phase intermetallic particles comprise aluminum, iron, and silicon, and wherein the α-phase intermetallic particles comprise aluminum, silicon, and one or more of iron, manganese, or chromium.

Aspect 16 is the aluminum alloy product of any previous or subsequent aspect, wherein the weight percent ratio of the α-phase intermetallic particles to the β-phase intermetallic particles in the aluminum alloy product is determined by a process comprising phase characterization using energy dispersive x ray spectroscopy (EDXS) composition analysis.

Aspect 17 is the aluminum alloy product of any previous or subsequent aspect, wherein a corrosion potential of the β-phase intermetallic particles is greater than that of an aluminum alloy matrix supporting the β-phase intermetallic particles.

Aspect 18 is the aluminum alloy product of any previous or subsequent aspect, wherein a corrosion potential of the β-phase intermetallic particles is greater than that of the α phase intermetallic particles.

Aspect 19 is the aluminum alloy product of any previous or subsequent aspect, wherein the aluminum alloy product exhibits reduced corrosion potential as compared to a comparable aluminum alloy product comprising: a comparable 6xxx series aluminum alloy having a total concentration of α-phase-stabilizing alloying elements of less than 0.5 wt.%; β-phase intermetallic particles; and α-phase intermetallic particles, wherein a comparable weight percent ratio of the α-phase intermetallic particles to the β-phase intermetallic particles in the comparable aluminum alloy is less than 1.

Aspect 20 is a joined aluminum alloy product, comprising: the aluminum alloy product of any of any previous or subsequent aspect; a second product; and an adhesive between the aluminum alloy product and the second product, the adhesive joining the aluminum alloy product and the second product.

Aspect 21 is the joined aluminum alloy product of any previous or subsequent aspect, exhibiting a bond durability of from 30 cycles to 65 cycles or more according to an ASTM D3762 standard test or a FLTM BV 101-07 standard test.

Aspect 22 is the joined aluminum alloy product of any previous or subsequent aspect, further comprising an adhesion promoter on a surface of the aluminum alloy product or between the aluminum alloy product and the adhesive.

Aspect 23 is the joined aluminum alloy product of any previous or subsequent aspect, wherein at least a portion of a surface of the aluminum alloy product is chemically modified or pretreated.

Aspect 24 is the joined aluminum alloy product of any previous or subsequent aspect, wherein at least a portion of a surface of the aluminum alloy product includes a self-assembled monolayer of one or more phosphorus containing organic acids.

Aspect 25 is a method comprising: preparing an aluminum alloy product, the aluminum alloy product comprising: a 6xxx series aluminum alloy, wherein a total concentration of α-phase-stabilizing alloying elements in the 6xxx series aluminum alloy is greater than or about 0.2 wt.%, or wherein a ratio of the total concentration of α-phase-stabilizing alloying elements to an amount of excess silicon in the 6xxx series aluminum alloy is greater than or about 1.0, or wherein a ratio of an amount of magnesium in the 6xxx series aluminum alloy to an amount of silicon in the 6xxx series aluminum alloy is less than or about 4.0; β-phase intermetallic particles; and α-phase intermetallic particles; and subjecting the aluminum alloy product to processing conditions that modify or control a weight percent ratio of the α-phase intermetallic particles to the β-phase intermetallic particles in the aluminum alloy product to be greater than 2.

Aspect 26 is the method of any previous aspect, wherein the subjecting generates the aluminum alloy product of any previous aspect.

Aspect 27 is the aluminum alloy product of any previous aspect, prepared according to the method of any previous aspect.

The foregoing description of the embodiments, including illustrated embodiments, has been presented only for the purpose of illustration and description and is not intended to be exhaustive or limiting to the precise forms disclosed. Numerous modifications, adaptations, and uses thereof will be apparent to those skilled in the art without departing from the scope of the claims.

## Claims

1. An aluminum alloy product comprising:
a 6xxx series aluminum alloy comprising
up to 1.8 wt.% silicon;
up to 1.8 wt.% iron;
up to 1.5 wt.% copper;
up to 0.5 wt.% manganese;
from 0.2 wt.% to 3.0 wt.% magnesium;
up to 0.25 wt.% titanium;
up to 1.5 wt.% zinc;
up to 1 wt.% nickel;
up to 0.25 wt.% vanadium;
up to 0.25 wt.% zirconium;
up to 0.5 wt.% chromium; and
up to 0.15 wt.% impurities, and the remainder aluminum,
wherein a ratio of the total concentration of α-phase-stabilizing alloying elements to an amount of excess silicon in the 6xxx series aluminum alloy is greater than or about 1.0, wherein the α-phase-stabilizing alloying elements comprise one or more of copper, chromium, manganese, zirconium or vanadium;
wherein the 6xxx series aluminum alloy includes β-phase intermetallic particles and α-phase intermetallic particles; and
wherein a weight percent ratio of the α-phase intermetallic particles to the β-phase intermetallic particles in the aluminum alloy product is greater than 2.0.

2. The aluminum alloy product of claim 1,
wherein the 6xxx series aluminum alloy comprises up to 0.25 wt.% titanium carbide.

3. The aluminum alloy product of claim 1 or 2,
wherein the total concentration of α-phase-stabilizing alloying elements is greater than or about 0.2 wt.% and/or less than or about 2 wt.%; and/or
wherein the ratio of the total concentration of α-phase-stabilizing alloying elements to the amount of excess silicon in the 6xxx series aluminum alloy is less than or about 3.

4. The aluminum alloy product of any one of claims 1-3,
wherein the 6xxx series aluminum alloy is substantially free of boron.

5. The aluminum alloy product of any one of claims 1-4, wherein a concentration of a carbide grain refiner in the 6xxx series aluminum alloy is up to 10 parts per million.

6. The aluminum alloy product of any one of claims 1-5, wherein a ratio of the total concentration of α-phase-stabilizing stabilizing elements to iron in the α-phase intermetallic particles is greater than 0.5.

7. The aluminum alloy product of any one of claims 1-6, wherein the β-phase intermetallic particles exhibit an aspect ratio greater than 2, and wherein the α-phase intermetallic particles exhibit an aspect ratio of from 1 to 1.5; and/or
wherein the β-phase intermetallic particles comprise aluminum, iron, and silicon, and wherein the α-phase intermetallic particles comprise aluminum, silicon, and one or more of iron, manganese, or chromium; and/or
wherein the weight percent ratio of the α-phase intermetallic particles to the β-phase intermetallic particles in the aluminum alloy product is determined by a process comprising phase characterization using energy dispersive x-ray spectroscopy (EDXS) composition analysis.

8. The aluminum alloy product of any one of claims 1-7, wherein a corrosion potential of the β-phase intermetallic particles is greater than that of an aluminum alloy matrix supporting the β-phase intermetallic particles; and/or
wherein a corrosion potential of the β-phase intermetallic particles is greater than that of the α-phase intermetallic particles.

9. A joined aluminum alloy product, comprising:
the aluminum alloy product of any of claims 1-8;
a second product; and
an adhesive between the aluminum alloy product and the second product, the adhesive joining the aluminum alloy product and the second product.

10. The joined aluminum alloy product of claim 9,
further comprising an adhesion promoter on a surface of the aluminum alloy product or between the aluminum alloy product and the adhesive; and/or
wherein at least a portion of a surface of the aluminum alloy product is chemically modified or pretreated; and/or
wherein at least a portion of a surface of the aluminum alloy product includes a self-assembled monolayer of one or more phosphorus containing organic acids.

11. A method for preparing an aluminum alloy product according to any of claims 1-8, comprising: casting a 6xxx series aluminum alloy comprising
up to 1.8 wt.% silicon;
up to 1.8 wt.% iron;
up to 1.5 wt.% copper;
up to 0.5 wt.% manganese;
from 0.2 wt.% to 3.0 wt.% magnesium;
up to 0.25 wt.% titanium;
up to 1.5 wt.% zinc;
up to 1 wt.% nickel;
up to 0.25 wt.% vanadium;
up to 0.25 wt.% zirconium;
up to 0.5 wt.% chromium; and
up to 0.15 wt.% impurities, and the remainder aluminum to form a cast aluminum alloy product,
homogenizing the cast aluminum alloy product to form a homogenized aluminum alloy product, and
subjecting the homogenized aluminum alloy product to one or more hot rolling passes and/or one or more cold rolling passes to form a rolled aluminum alloy product.

## Patentansprüche

1. Aluminiumlegierungsprodukt, umfassend:
eine Aluminiumlegierung der Serie 6xxx umfassend
bis zu 1,8 Gew.-% Silizium;
bis zu 1,8 Gew.-% Eisen;
bis zu 1,5 Gew.-% Kupfer;
bis zu 0,5 Gew.-% Mangan;
von 0,2 Gew.-% bis 3,0 Gew.-% Magnesium;
bis zu 0,25 Gew.-% Titan;
bis zu 1,5 Gew.-% Zink;
bis zu 1 Gew.-% Nickel;
bis zu 0,25 Gew.-% Vanadium;
bis zu 0,25 Gew.-% Zirkonium;
bis zu 0,5 Gew.-% Chrom;
und bis zu 0,15 Gew.-% Verunreinigungen, und der Rest Aluminium,
wobei ein Verhältnis der Gesamtkonzentration von α-phasenstabihsierenden Legierungselementen zu einer Menge von überschüssigem Silizium in der Aluminiumlegierung der 6xxx-Serie größer als oder etwa 1,0 ist, wobei die α-phasenstabilisierenden Legierungselemente eines oder mehrere von Kupfer, Chrom, Mangan, Zirkonium oder Vanadium umfassen,
wobei die Aluminiumlegierung der Serie 6xxx intermetallische Partikel in der β-Phase und intermetallische Partikel in der α-Phase enthält; und
wobei das Gewichtsprozentverhältnis der intermetallischen Partikel der α-Phase zu den intermetallischen Partikeln der β-Phase in dem Aluminiumlegierungsprodukt größer als 2,0 ist.

2. Aluminiumlegierungsprodukt nach Anspruch 1, wobei die Aluminiumlegierung der Serie 6xxx bis zu 0,25 Gew.-% Titancarbid enthält.

3. Aluminiumlegierungsprodukt nach Anspruch 1 oder 2, wobei die Gesamtkonzentration der a-phasenstabihsierenden Legierungselemente mehr als oder etwa 0,2 Gew.-% und/oder weniger als oder etwa 2 Gew.-% beträgt; und/oder wobei das Verhältnis der Gesamtkonzentration der a-phasenstabihsierenden Legierungselemente zu der Menge an überschüssigem Silizium in der Aluminiumlegierung der 6xxx-Serie weniger als oder etwa 3 beträgt.

4. Aluminiumlegierungsprodukt nach einem der Ansprüche 1 bis 3, wobei die Aluminiumlegierung der Serie 6xxx im Wesentlichen frei von Bor ist.

5. Aluminiumlegierungsprodukt nach einem der Ansprüche 1-4, wobei die Konzentration eines Karbidkornrefiners in der Aluminiumlegierung der Serie 6xxx bis zu 10 Teile pro Million beträgt.

6. Aluminiumlegierungsprodukt nach einem der Ansprüche 1-5, wobei das Verhältnis der Gesamtkonzentration der α-Phasen-stabilisierenden Elemente zu Eisen in den α-Phasen-intermetallischen Partikeln größer als 0,5 ist.

7. Aluminiumlegierungsprodukt nach einem der Ansprüche 1 bis 6, wobei die intermetallischen Partikel der β-Phase ein Aspektverhältnis von mehr als 2 aufweisen, und wobei die intermetallischen Partikel der α-Phase ein Aspektverhältnis von 1 bis 1,5 aufweisen; und/oder
wobei die β-phasigen intermetallischen Teilchen Aluminium, Eisen und Silicium umfassen, und wobei die α-phasigen intermetallischen Partikel Aluminium, Silicium und eines oder mehrere von Eisen, Mangan oder Chrom umfassen; und/oder
wobei das Gewichtsprozentverhältnis der intermetallischen Partikel der α-Phase zu den intermetallischen Partikeln der β-Phase in dem Aluminiumlegierungsprodukt durch ein Verfahren bestimmt wird, das eine Phasencharakterisierung unter Verwendung einer energiedispersiven Röntgenspektroskopie (EDXS)-Zusammensetzungsanalyse umfasst.

8. Aluminiumlegierungsprodukt nach einem der Ansprüche 1-7, wobei das Korrosionspotential der intermetallischen Partikel der β-Phase größer ist als das einer Aluminiumlegierungsmatrix, die die intermetallischen Partikel der β-Phase trägt; und/oder wobei das Korrosionspotential der intermetallischen Partikel der β-Phase größer ist als das der intermetallischen Partikel der α-Phase.

9. Aluminiumlegierungs-Verbundprodukt, umfassend:
das Aluminiumlegierungsprodukt nach einem der Ansprüche 1-8;
ein zweites Produkt; und
ein Haftmittel zwischen dem Aluminiumlegierungsprodukt und dem zweiten Produkt, wobei das Haftmittel das Aluminiumlegierungsprodukt und das zweite Produkt verbindet.

10. Aluminiumlegierungs-Verbundprodukt nach Anspruch 9,
ferner umfassend einen Haftvermittler auf einer Oberfläche des Aluminiumlegierungsprodukts oder zwischen dem Aluminiumlegierungsprodukt und das Haftmittel; und/oder
wobei mindestens ein Teil einer Oberfläche des Aluminiumlegierungsprodukts chemisch modifiziert oder vorbehandelt ist; und/oder
wobei mindestens ein Teil einer Oberfläche des Aluminiumlegierungsprodukts eine selbst-assemblierte Monoschicht aus einer oder mehreren phosphorhaltigen organischen Säuren enthält.

11. Verfahren zur Herstellung eines Aluminiumlegierungsprodukts nach einem der Ansprüche 1-8, umfassend: Gießen einer Aluminiumlegierung der Serie 6xxx, umfassend
bis zu 1,8 Gew.-% Silizium;
bis zu 1,8 Gew.-% Eisen;
bis zu 1,5 Gew.-% Kupfer;
bis zu 0,5 Gew.-% Mangan;
von 0,2 Gew.-% bis 3,0 Gew.-% Magnesium;
bis zu 0,25 Gew.-% Titan;
bis zu 1,5 Gew.-% Zink;
bis zu 1 Gew.-% Nickel;
bis zu 0,25 Gew.-% Vanadium;
bis zu 0,25 Gew.-% Zirkonium;
bis zu 0,5 Gew.-% Chrom;
und bis zu 0,15 Gew.-% Verunreinigungen, und der Rest Aluminium, um ein gegossenes Aluminiumgusslegierungsprodukt zu bilden,
Homogenisieren des gegossenen Aluminiumlegierungsprodukts, um ein homogenisiertes Aluminiumlegierungsprodukt zu bilden, und
Unterziehen des homogenisierten Aluminiumlegierungsprodukts einem oder mehreren Warmwalzstichen und/oder einem oder mehreren Kaltwalzstichen, um ein gewalztes Aluminiumlegierungsprodukt zu bilden.

## Revendications

1. Produit en alliage d'aluminium comprenant :
un alliage d'aluminium de la série 6xxx comprenant
jusqu'à 1,8 % en poids de silicium ;
jusqu'à 1,8 % en poids de fer ;
jusqu'à 1,5 % en poids de cuivre ;
jusqu'à 0,5 % en poids de manganèse ;
de 0,2 % en poids à 3,0 % en poids de magnésium ;
jusqu'à 0,25 % en poids de titane ;
jusqu'à 1,5 % en poids de zinc ;
jusqu'à 1 % en poids de nickel ;
jusqu'à 0,25 % en poids de vanadium ;
jusqu'à 0,25 % en poids de zirconium ;
jusqu'à 0,5 % en poids de chrome ; et
jusqu'à 0,15 % en poids d'impuretés, et le reste étant de l'aluminium,
dans lequel un rapport de la concentration totale d'éléments d'alliage stabilisant la phase α à une quantité de silicium en excès dans l'alliage d'aluminium de la série 6xxx est supérieur ou égal à environ 1,0, dans lequel les éléments d'alliage stabilisant la phase α comprennent l'un ou plusieurs parmi le cuivre, le chrome, le manganèse, le zirconium ou le vanadium ;
dans lequel l'alliage d'aluminium de la série 6xxx comprend des particules intermétalliques de phase β et des particules intermétalliques de phase α ; et
dans lequel un rapport de pourcentage en poids des particules intermétalliques de phase α aux particules intermétalliques de phase β dans le produit en alliage d'aluminium est supérieur à 2,0.

2. Produit en alliage d'aluminium selon la revendication 1,
dans lequel l'alliage d'aluminium de la série 6xxx comprend jusqu'à 0,25 % en poids de carbure de titane.

3. Produit en alliage d'aluminium selon la revendication 1 ou 2,
dans lequel la concentration totale d'éléments d'alliage stabilisant la phase α est supérieure ou égale à environ 0,2 % en poids et/ou inférieure ou égale à environ 2 % en poids ; et/ou
dans lequel le rapport de la concentration totale d'éléments d'alliage stabilisant la phase α à la quantité de silicium en excès dans l'alliage d'aluminium de la série 6xxx est inférieur ou égal à environ 3.

4. Produit en alliage d'aluminium selon l'une quelconque des revendications 1 à 3,
dans lequel l'alliage d'aluminium de la série 6xxx est sensiblement exempt de bore.

5. Produit en alliage d'aluminium selon l'une quelconque des revendications 1 à 4, dans lequel la concentration d'un agent d'affinage de grain de carbure dans l'alliage d'aluminium de la série 6xxx est inférieure ou égale à 10 parties par million.

6. Produit en alliage d'aluminium selon l'une quelconque des revendications 1 à 5, dans lequel le rapport de la concentration totale des éléments stabilisant la phase α au fer dans les particules intermétalliques de phase α est supérieur à 0,5.

7. Produit en alliage d'aluminium selon l'une quelconque des revendications 1 à 6, dans lequel les particules intermétalliques de phase β présentent un rapport d'aspect supérieur à 2, et dans lequel les particules intermétalliques de phase α présentent un rapport d'aspect de 1 à 1,5 ; et/ou
dans lequel les particules intermétalliques de phase β comprennent de l'aluminium, du fer et du silicium, et les particules intermétalliques de phase α comprennent de l'aluminium, du silicium et l'un ou plusieurs parmi du fer, du manganèse ou du chrome ; et/ou
dans lequel le rapport en pourcentage en poids des particules intermétalliques de phase α aux particules intermétalliques de phase β dans le produit en alliage d'aluminium est déterminé par un procédé comprenant une caractérisation de phase à l'aide d'une analyse de composition par spectroscopie à rayons X à dispersion d'énergie (EDXS).

8. Produit en alliage d'aluminium selon l'une quelconque des revendications 1 à 7, dans lequel un potentiel de corrosion des particules intermétalliques de phase β est supérieur à celui d'une matrice en alliage d'aluminium supportant les particules intermétalliques de phase β ; et/ou
dans lequel un potentiel de corrosion des particules intermétalliques de phase β est supérieur à celui des particules intermétalliques de phase α.

9. Produit assemblé en alliage d'aluminium, comprenant :
le produit en alliage d'aluminium selon l'une quelconque des revendications 1 à 8 ;
un deuxième produit ; et
un adhésif entre le produit en alliage d'aluminium et le deuxième produit, l'adhésif assemblant le produit en alliage d'aluminium et le deuxième produit.

10. Produit assemblé en alliage d'aluminium selon la revendication 9,
comprenant en outre un promoteur d'adhérence sur une surface du produit en alliage d'aluminium ou entre le produit en alliage d'aluminium et l'adhésif ; et/ou
dans lequel au moins une partie d'une surface du produit en alliage d'aluminium est chimiquement modifiée ou prétraitée ; et/ou
dans lequel au moins une partie d'une surface du produit en alliage d'aluminium comprent une monocouche autoassemblée d'un ou plusieurs acides organiques contenant du phosphore.

11. Procédé de préparation d'un produit en alliage d'aluminium selon l'une quelconque des revendications 1 à 8, comprenant : le moulage d'un alliage d'aluminium de la série 6xxx comprenant
jusqu'à 1,8 % en poids de silicium ;
jusqu'à 1,8 % en poids de fer ;
jusqu'à 1,5 % en poids de cuivre ;
jusqu'à 0,5 % en poids de manganèse ;
de 0,2 % en poids à 3,0 % en poids de magnésium ;
jusqu'à 0,25 % en poids de titane ;
jusqu'à 1,5 % en poids de zinc ;
jusqu'à 1 % en poids de nickel ;
jusqu'à 0,25 % en poids de vanadium ;
jusqu'à 0,25 % en poids de zirconium ;
jusqu'à 0,5 % en poids de chrome ; et
jusqu'à 0,15 % en poids d'impuretés, et le reste étant de l'aluminium pour former un produit en alliage d'aluminium moulé,
l'homogénéisation du produit en alliage d'aluminium moulé pour former un produit en alliage d'aluminium homogénéisé, et
soumettre le produit en alliage d'aluminium homogénéisé à une ou plusieurs passes de laminage à chaud et/ou à une ou plusieurs passes de laminage à froid pour former un produit en alliage d'aluminium laminé.
